# EUROPEAN PATENT APPLICATION

(11) **EP 2 557 877 A2**
(43) Date of publication of application: **13.02.2013**
(21) Application number: 12191950.0
(22) Date of filing: 09.06.2010
(51) Int. Cl.: H04W 72/08, H04W 72/04, H04W 76/02, H04L 5/00

(54) **Method and apparatus for facilitating radio link monitoring and recovery**

(30) Priority: 09.06.2009 US 185480 P; 08.06.2010 US 796556
(62) Divisional of application: 10731635.8
(71) Applicant: Qualcomm Incorporated, San Diego, CA 92121-1714 (US)
(72) Inventor: Damnjanovic, Jelena M., San Diego, CA, 92121 (US); Tenny, Nathan Edward, San Diego, CA, 92121 (US); Chen, Wanshi, San Diego, 92121-1714 (US); Montojo, Juan, San Diego, 92121-1714 (US); Damnjanovic, Aleksandar, San Diego, CA, 92121 (US)
(74) Representative: Hohgardt, Martin

(57) **Abstract**

A method and apparatus that facilitates radio link monitoring are described, the method comprising receiving (620) a set of channel quality indicator measurements, wherein the set of channel quality indicator measurements is associated with a set of configured downlink carriers monitored by a wireless terminal (304), updating (625) an active set of carriers (308) based on the set of channel quality indicator measurements, wherein the active set of carriers (308) is an active carrier subset of the set of configured downlink carriers, ascertaining (605) a set of control carriers based on an updated active set of carriers (308), wherein the set of control carriers is a control carrier subset of the updated active set of carriers (308) and configuring (610, 615) the wireless terminal (304) to monitor a control signal over at least one carrier in the set of control carriers.

## Description

### CROSS-REFERENCE TO RELATED APPLICATIONS

This application claims the benefit of U.S. Provisional Patent Application Serial No. 61/185,480 entitled "SYSTEMS AND METHODS OF RADIO LINK MONITORING AND RECOVERING," which was filed June 9, 2009. The aforementioned application is herein incorporated by reference in its entirety.

### BACKGROUND

### I. Field

The following description relates generally to wireless communications, and more particularly to methods and apparatuses for facilitating a strategic radio link failure determination.

### II. Background

Wireless communication systems are widely deployed to provide various types of communication content such as voice, data, and so on. These systems may be multiple-access systems capable of supporting communication with multiple users by sharing the available system resources (e.g., bandwidth and transmit power). Examples of such multiple-access systems include code division multiple access (CDMA) systems, time division multiple access (TDMA) systems, frequency division multiple access (FDMA) systems, 3GPP Long Term Evolution (LTE) systems, and orthogonal frequency division multiple access (OFDMA) systems.

Generally, a wireless multiple-access communication system can simultaneously support communication for multiple wireless terminals. Each terminal communicates with one or more base stations via transmissions on the forward and reverse links. The forward link (or downlink) refers to the communication link from the base stations to the terminals, and the reverse link (or uplink) refers to the communication link from the terminals to the base stations. This communication link may be established via a single-in-single-out, multiple-in-signal-out or a multiple-in-multiple-out (MIMO) system.

A MIMO system employs multiple (*N_{T}*) transmit antennas and multiple (*N_{R}*) receive antennas for data transmission. A MIMO channel formed by the *N_{T}* transmit and *N_{R}* receive antennas may be decomposed into *N_{S}* independent channels, which are also referred to as spatial channels, where N_{S} ≤ min {N_{T}, N_{R}}. Each of the *N_{S}* independent channels corresponds to a dimension. The MIMO system can provide improved performance (e.g., higher throughput and/or greater reliability) if the additional dimensionalities created by the multiple transmit and receive antennas are utilized.

A MIMO system supports a time division duplex (TDD) and frequency division duplex (FDD) systems. In a TDD system, the forward and reverse link transmissions are on the same frequency region so that the reciprocity principle allows the estimation of the forward link channel from the reverse link channel. This enables the access point to extract transmit beamforming gain on the forward link when multiple antennas are available at the access point.

With respect to radio link monitoring, it is noted that resources for performing such monitoring continue to be utilized until a radio link failure is declared. On the one hand, if a radio link failure is declared too early, a potentially recoverable communication may be lost prematurely. On the other hand, if a radio link failure is declared too late, valuable resources may be wasted. Accordingly, although a strategic mechanism for declaring radio link failure is desirable, such a mechanism is lacking in conventional systems inefficient mechanism for declaring radio link failure.

The above-described deficiencies of current wireless communication systems are merely intended to provide an overview of some of the problems of conventional systems, and are not intended to be exhaustive. Other problems with conventional systems and corresponding benefits of the various non-limiting embodiments described herein may become further apparent upon review of the following description.

### SUMMARY

The following presents a simplified summary of one or more embodiments in order to provide a basic understanding of such embodiments. This summary is not an extensive overview of all contemplated embodiments, and is intended to neither identify key or critical elements of all embodiments nor delineate the scope of any or all embodiments. Its sole purpose is to present some concepts of one or more embodiments in a simplified form as a prelude to the more detailed description that is presented later.

In accordance with one or more embodiments and corresponding disclosure thereof, various aspects are described in connection with radio link monitoring. In one aspect, methods and computer program products are disclosed that facilitate making a radio link failure determination. These embodiments include receiving a downlink communication via a set of configured downlink carriers. These embodiments further include monitoring a channel quality of a received signal over the set of configured downlink carriers. These embodiments also include tracking a control channel quality of a control signal over at least one primary carrier. Here, the at least one primary carrier is included in a set of control carriers, wherein the set of control carriers is included in the set of configured downlink carriers. A radio link failure determination is then performed based on the control channel quality.

In another aspect, an apparatus configured to facilitate making a radio link failure determination is disclosed. Within such embodiment, the apparatus includes a processor configured to execute computer executable components stored in memory. The computer executable components include a communication component, a monitoring component, a control monitoring component, and a determining component. The communication component is configured to receive a downlink communication via a set of configured downlink carriers. The monitoring component is then configured to monitor a channel quality of a received signal over the set of configured downlink carriers, whereas the control monitoring component is configured to track a control channel quality over at least one primary carrier. For these embodiments, the at least one primary carrier is included in a set of control carriers, and the set of control carriers is included in the set of configured downlink carriers. The determining component is then configured to perform a radio link failure determination based on the control channel quality.

In a further aspect, another apparatus is disclosed. Within such embodiment, the apparatus includes means for receiving, means for monitoring, means for tracking, and means for performing. For this embodiment, the means for receiving is a means for receiving a downlink communication via a set of configured downlink carriers. The means for monitoring is then configured to monitor a channel quality of a received signal over the set of configured downlink carriers, whereas the means for tracking is configured to track a control channel quality of a control signal over at least one primary carrier. For these embodiments, the at least one primary carrier is included in a set of control carriers, and the set of control carriers is included in the set of configured downlink carriers. The means for performing then performs a radio link failure determination based on the control channel quality.

In another aspect, other methods and computer program products are disclosed for making a radio link failure determination. These embodiments include receiving a downlink communication via a set of configured downlink carriers, and monitoring a channel quality of a received signal over the set of configured downlink carriers. In response to a link loss associated with each of a set of control carriers, an additional carrier is then selected. For these embodiments, the set of control carriers is included in the set of configured downlink carriers, wherein the additional carrier is a configured downlink carrier which is not included in the set of control carriers. A control channel quality of a control signal is then tracked over the additional carrier, and a radio link failure determination is performed based on the control channel quality.

Another apparatus for radio link monitoring is also disclosed. Within such embodiment, the apparatus includes a processor configured to execute computer executable components stored in memory. The computer executable components include a communication component, a monitoring component, a control monitoring component, and a determining component. The communication component is configured to receive a downlink communication via a set of configured downlink carriers. The monitoring component is then configured to monitor a channel quality of a received signal over the set of configured downlink carriers, whereas the control monitoring component is configured to track a control channel quality of a control signal over at least one additional carrier selected in response to a link loss associated with each of a set of control carriers. Within such embodiment, the set of control carriers is included in the set of configured downlink carriers, wherein the at least one additional carrier is a configured downlink carrier which is not included in the set of control carriers. Furthermore, the determining component is configured to perform a radio link failure determination based on the control channel quality.

In a further aspect, another apparatus is disclosed. Within such embodiment, the apparatus includes means for receiving, means for monitoring, means for selecting, means for tracking, and means for performing. For this embodiment, the means for receiving receives c a downlink communication via a set of configured downlink carriers. The means for monitoring then monitors a channel quality of a received signal over the set of configured downlink carriers, whereas the means for selecting selects an additional carrier in response to a link loss associated with each of a set of control carriers. Within such embodiment, the set of control carriers is included in the set of configured downlink carriers, wherein the additional carrier is a configured downlink carrier which is not included in the set of control carriers. The means for tracking then tracks a control channel quality of a control signal over the additional carrier, whereas the means for performing performs a radio link failure determination based on the control channel quality.

In other aspects, methods and computer program products are disclosed for facilitating a radio link failure determination. Such embodiments may include a series of acts and/or instructions. For instance an act/instruction is included to receive a set of channel quality indicator measurements associated with a set of configured downlink carriers monitored by a wireless terminal. These embodiments further include updating an active set of carriers based on the set of channel quality indicator measurements, and ascertaining a set of control carriers based on an updated active set of carriers. For these embodiments, the active set of carriers is an active carrier subset of the set of configured downlink carriers, whereas the set of control carriers is a control carrier subset of the updated active set of carriers. The wireless terminal is then configured to monitor a control signal over at least one carrier in the set of control carriers.

An apparatus configured to facilitate a radio link failure determination is also disclosed. Within such embodiment, the apparatus includes a processor configured to execute computer executable components stored in memory. The computer executable components include a communication component, an active carrier update component, a control carrier update component, and a control monitoring component. The communication component is configured to receive a set of channel quality indicator measurements associated with a set of configured downlink carriers monitored by a wireless terminal. The active carrier update component is then configured to update an active set of carriers based on the set of channel quality indicator measurements, whereas the control carrier update component is configured to ascertain a set of control carriers based on an updated active set of carriers. For these embodiments, the active set of carriers is an active carrier subset of the set of configured downlink carriers, whereas the set of control carriers is a control carrier subset of the updated active set of carriers. The control monitoring component may then configure the wireless terminal to monitor a control signal over at least one carrier in the set of control carriers.

In a further aspect, another apparatus is disclosed. Within such embodiment, the apparatus includes means for receiving, means for updating, means for ascertaining, and means for configuring. The means for receiving receives a set of channel quality indicator measurements associated with a set of configured downlink carriers monitored by a wireless terminal. The means for updating then updates an active set of carriers based on the set of channel quality indicator measurements, whereas the means for ascertaining ascertains a set of control carriers based on an updated active set of carriers. For this particular embodiment, the active set of carriers is an active carrier subset of the set of configured downlink carriers, whereas the set of control carriers is a control carrier subset of the updated active set of carriers. The means for configuring then configures the wireless terminal to monitor a control signal over at least one carrier in the set of control carriers. In a further aspect, a means for transmitting may also be included, wherein the means for transmitting transmits a monitoring scheme to the wireless terminal to facilitate an identification of at least one carrier to monitor.

To the accomplishment of the foregoing and related ends, the one or more embodiments comprise the features hereinafter fully described and particularly pointed out in the claims. The following description and the annexed drawings set forth in detail certain illustrative aspects of the one or more embodiments. These aspects are indicative, however, of but a few of the various ways in which the principles of various embodiments can be employed and the described embodiments are intended to include all such aspects and their equivalents.

### BRIEF DESCRIPTION OF THE DRAWINGS

FIG. 1 is an illustration of a wireless communication system in accordance with various aspects set forth herein.

FIG. 2 is an illustration of an exemplary wireless network environment that can be employed in conjunction with the various systems and methods described herein.

FIG. 3 is an illustration of an exemplary system for facilitating a radio link failure determination according to an embodiment.

FIG. 4 illustrates a block diagram of an exemplary base station that facilitates determining radio link failure in accordance with an aspect of the subject specification.

FIG. 5 is an illustration of an exemplary coupling of electrical components that effectuate a radio link failure determination.

FIG. 6 is a flow chart illustrating an exemplary methodology for facilitating a radio link failure determination in accordance with an aspect of the subject specification.

FIG. 7 illustrates a block diagram of an exemplary wireless terminal that facilitates determining radio link failure in accordance with an aspect of the subject specification.

FIG. 8 is an illustration of a first exemplary coupling of electrical components that effectuate determining radio link failure.

FIG. 9 is an illustration of a second exemplary coupling of electrical components that effectuate determining radio link failure.

FIG. 10 is flow chart illustrating an exemplary methodology for facilitating a radio link failure determination in accordance with an aspect of the subject specification.

FIG. 11 is an illustration of an exemplary communication system implemented in accordance with various aspects including multiple cells.

FIG. 12 is an illustration of an exemplary base station in accordance with various aspects described herein.

FIG. 13 is an illustration of an exemplary wireless terminal implemented in accordance with various aspects described herein.

### DETAILED DESCRIPTION

Various embodiments are now described with reference to the drawings, wherein like reference numerals are used to refer to like elements throughout. In the following description, for purposes of explanation, numerous specific details are set forth in order to provide a thorough understanding of one or more embodiments. It may be evident, however, that such embodiment(s) may be practiced without these specific details. In other instances, well-known structures and devices are shown in block diagram form in order to facilitate describing one or more embodiments.

The subject specification is directed towards facilitating a strategic radio link failure determination. In a particular aspect, the subject innovation designates criteria on the network side, rather than the user equipment side, for managing link failures in a multi-carrier communication system (e.g., LTE-Advanced (LTE-A)). To this end, an exemplary embodiment is disclosed in which an active set of carriers is designated for an eNodeB, wherein such active set includes a set of carriers that are usable from the point of view of the user equipment. As such, the active set of carriers includes a group of configured carriers that exhibit qualities acceptable to a user equipment associated therewith. For example, upload and downlinks carriers can be configured for user equipment, and tracked to identify carriers with acceptable channel qualities, which are then maintained as part of the active set.

Accordingly, user equipment can be scheduled for carriers that are designated as part of the active set. In a related aspect, a criteria for including a carrier as part of the active set can include predetermined thresholds at the eNodeB side, wherein such thresholds can be associated with channel/radio link quality, various channel quality indicator (CQI) indexes, reporting indexes, other rule-based thresholds, and the like. Carriers can then be included and/or excluded from the active set of carriers. In an aspect, when one carrier fails in a system that employs two primary carriers, the other carrier can be reconfigured for scheduling user equipment. In a related aspect, other carriers can be configured and monitored, wherein upon detection of performance problems with the original carrier, transmission on other carriers can then be considered. Hence, such aspects of the subject innovation exploit the existence of multiple carriers in the system, wherein if the primary carrier that is configured for control fails, then other carriers that have acceptable channel qualities can be employed to convey control thereto (instead of declaring a radio link failure). For example, user equipment can be assigned separate identifier (e.g., Cell Radio Network Temporary Identification (C-RNTI)) for each usable carrier as a fall-back to monitor for control in case the primary carrier is configured for control failure.

The techniques described herein can be used for various wireless communication systems such as code division multiple access (CDMA), time division multiple access (TDMA), frequency division multiple access (FDMA), orthogonal frequency division multiple access (OFDMA), single carrier-frequency division multiple access (SC-FDMA), High Speed Packet Access (HSPA), and other systems. The terms "system" and "network" are often used interchangeably. A CDMA system can implement a radio technology such as Universal Terrestrial Radio Access (UTRA), CDMA2000, *etc.* UTRA includes Wideband-CDMA (W-CDMA) and other variants of CDMA. CDMA2000 covers IS-2000, IS-95 and IS-856 standards. A TDMA system can implement a radio technology such as Global System for Mobile Communications (GSM). An OFDMA system can implement a radio technology such as Evolved UTRA (E-UTRA), Ultra Mobile Broadband (UMB), IEEE 802.11 (Wi-Fi), IEEE 802.16 (WiMAX), IEEE 802.20, Flash-OFDM, *etc.* UTRA and E-UTRA are part of Universal Mobile Telecommunication System (UMTS). 3GPP Long Term Evolution (LTE) is a release of UMTS that uses E-UTRA, which employs OFDMA on the downlink and SC-FDMA on the uplink.

Single carrier frequency division multiple access (SC-FDMA) utilizes single carrier modulation and frequency domain equalization. SC-FDMA has similar performance and essentially the same overall complexity as those of an OFDMA system. A SC-FDMA signal has lower peak-to-average power ratio (PAPR) because of its inherent single carrier structure. SC-FDMA can be used, for instance, in uplink communications where lower PAPR greatly benefits access terminals in terms of transmit power efficiency. Accordingly, SC-FDMA can be implemented as an uplink multiple access scheme in 3GPP Long Term Evolution (LTE) or Evolved UTRA.

High speed packet access (HSPA) can include high speed downlink packet access (HSDPA) technology and high speed uplink packet access (HSUPA) or enhanced uplink (EUL) technology and can also include HSPA+ technology. HSDPA, HSUPA and HSPA+ are part of the Third Generation Partnership Project (3GPP) specifications Release 5, Release 6, and Release 7, respectively.

High speed downlink packet access (HSDPA) optimizes data transmission from the network to the user equipment (UE). As used herein, transmission from the network to the user equipment UE can be referred to as the "downlink" (DL). Transmission methods can allow data rates of several Mbits/s. High speed downlink packet access (HSDPA) can increase the capacity of mobile radio networks. High speed uplink packet access (HSUPA) can optimize data transmission from the terminal to the network. As used herein, transmissions from the terminal to the network can be referred to as the "uplink" (UL). Uplink data transmission methods can allow data rates of several Mbit/s. HSPA+ provides even further improvements both in the uplink and downlink as specified in Release 7 of the 3GPP specification. High speed packet access (HSPA) methods typically allow for faster interactions between the downlink and the uplink in data services transmitting large volumes of data, for instance Voice over IP (VoIP), videoconferencing and mobile office applications

Fast data transmission protocols such as hybrid automatic repeat request, (HARQ) can be used on the uplink and downlink. Such protocols, such as hybrid automatic repeat request (HARQ), allow a recipient to automatically request retransmission of a packet that might have been received in error.

Various embodiments are described herein in connection with an access terminal. An access terminal can also be called a system, subscriber unit, subscriber station, mobile station, mobile, remote station, remote terminal, mobile device, user terminal, terminal, wireless communication device, user agent, user device, or user equipment (UE). An access terminal can be a cellular telephone, a cordless telephone, a Session Initiation Protocol (SIP) phone, a wireless local loop (WLL) station, a personal digital assistant (PDA), a handheld device having wireless connection capability, computing device, or other processing device connected to a wireless modem. Moreover, various embodiments are described herein in connection with a base station. A base station can be utilized for communicating with access terminal(s) and can also be referred to as an access point, Node B, Evolved Node B (eNodeB), access point base station, or some other terminology.

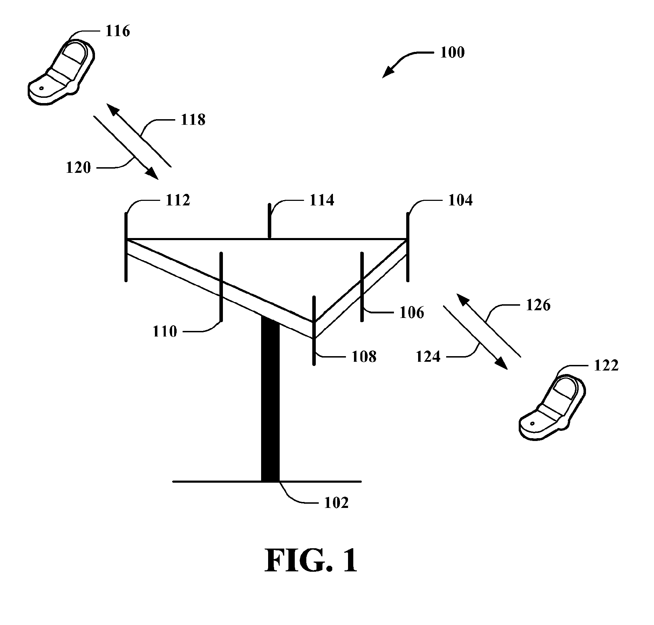

Referring now to Fig. 1, a wireless communication system 100 is illustrated in accordance with various embodiments presented herein. System 100 comprises a base station 102 that can include multiple antenna groups. For example, one antenna group can include antennas 104 and 106, another group can comprise antennas 108 and 110, and an additional group can include antennas 112 and 114. Two antennas are illustrated for each antenna group; however, more or fewer antennas can be utilized for each group. Base station 102 can additionally include a transmitter chain and a receiver chain, each of which can in turn comprise a plurality of components associated with signal transmission and reception (*e.g*., processors, modulators, multiplexers, demodulators, demultiplexers, antennas, *etc.*), as will be appreciated by one skilled in the art.

Base station 102 can communicate with one or more access terminals such as access terminal 116 and access terminal 122; however, it is to be appreciated that base station 102 can communicate with substantially any number of access terminals similar to access terminals 116 and 122. Access terminals 116 and 122 can be, for example, cellular phones, smart phones, laptops, handheld communication devices, handheld computing devices, satellite radios, global positioning systems, PDAs, and/or any other suitable device for communicating over wireless communication system 100. As depicted, access terminal 116 is in communication with antennas 112 and 114, where antennas 112 and 114 transmit information to access terminal 116 over a forward link 118 and receive information from access terminal 116 over a reverse link 120. Moreover, access terminal 122 is in communication with antennas 104 and 106, where antennas 104 and 106 transmit information to access terminal 122 over a forward link 124 and receive information from access terminal 122 over a reverse link 126. In a frequency division duplex (FDD) system, forward link 118 can utilize a different frequency band than that used by reverse link 120, and forward link 124 can employ a different frequency band than that employed by reverse link 126, for example. Further, in a time division duplex (TDD) system, forward link 118 and reverse link 120 can utilize a common frequency band and forward link 124 and reverse link 126 can utilize a common frequency band.

Each group of antennas and/or the area in which they are designated to communicate can be referred to as a sector of base station 102. For example, antenna groups can be designed to communicate to access terminals in a sector of the areas covered by base station 102. In communication over forward links 118 and 124, the transmitting antennas of base station 102 can utilize beamforming to improve signal-to-noise ratio of forward links 118 and 124 for access terminals 116 and 122. Also, while base station 102 utilizes beamforming to transmit to access terminals 116 and 122 scattered randomly through an associated coverage, access terminals in neighboring cells can be subject to less interference as compared to a base station transmitting through a single antenna to all its access terminals.

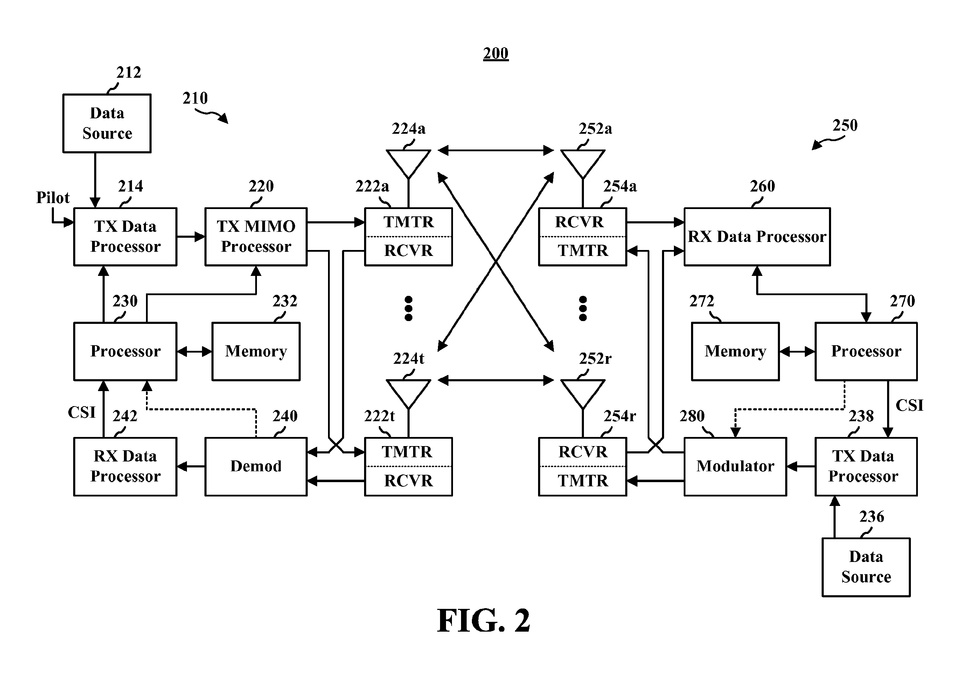

Fig. 2 shows an example wireless communication system 200. The wireless communication system 200 depicts one base station 210 and one access terminal 250 for sake of brevity. However, it is to be appreciated that system 200 can include more than one base station and/or more than one access terminal, wherein additional base stations and/or access terminals can be substantially similar or different from example base station 210 and access terminal 250 described below. In addition, it is to be appreciated that base station 210 and/or access terminal 250 can employ the systems and/or methods described herein to facilitate wireless communication there between.

At base station 210, traffic data for a number of data streams is provided from a data source 212 to a transmit (TX) data processor 214. According to an example, each data stream can be transmitted over a respective antenna. TX data processor 214 formats, codes, and interleaves the traffic data stream based on a particular coding scheme selected for that data stream to provide coded data.

The coded data for each data stream can be multiplexed with pilot data using orthogonal frequency division multiplexing (OFDM) techniques. Additionally or alternatively, the pilot symbols can be frequency division multiplexed (FDM), time division multiplexed (TDM), or code division multiplexed (CDM). The pilot data is typically a known data pattern that is processed in a known manner and can be used at access terminal 250 to estimate channel response. The multiplexed pilot and coded data for each data stream can be modulated (*e.g*., symbol mapped) based on a particular modulation scheme (*e.g*., binary phase-shift keying (BPSK), quadrature phase-shift keying (QPSK), M-phase-shift keying (M-PSK), M-quadrature amplitude modulation (M-QAM), *etc.*) selected for that data stream to provide modulation symbols. The data rate, coding, and modulation for each data stream can be determined by instructions performed or provided by processor 230.

The modulation symbols for the data streams can be provided to a TX MIMO processor 220, which can further process the modulation symbols (*e.g*., for OFDM). TX MIMO processor 220 then provides *N_{T}* modulation symbol streams to *N_{T}* transmitters (TMTR) 222a through 222t. In various embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (*e.g*., amplifies, filters, and upconverts) the analog signals to provide a modulated signal suitable for transmission over the MIMO channel. Further, *N_{T}* modulated signals from transmitters 222a through 222t are transmitted from *N_{T}* antennas 224a through 224t, respectively.

At access terminal 250, the transmitted modulated signals are received by *N_{R}* antennas 252a through 252r and the received signal from each antenna 252 is provided to a respective receiver (RCVR) 254a through 254r. Each receiver 254 conditions (*e.g*., filters, amplifies, and downconverts) a respective signal, digitizes the conditioned signal to provide samples, and further processes the samples to provide a corresponding "received" symbol stream.

An RX data processor 260 can receive and process the *N_{R}* received symbol streams from *N_{R}* receivers 254 based on a particular receiver processing technique to provide *N_{T}* "detected" symbol streams. RX data processor 260 can demodulate, deinterleave, and decode each detected symbol stream to recover the traffic data for the data stream. The processing by RX data processor 260 is complementary to that performed by TX MIMO processor 220 and TX data processor 214 at base station 210.

A processor 270 can periodically determine which available technology to utilize as discussed above. Further, processor 270 can formulate a reverse link message comprising a matrix index portion and a rank value portion.

The reverse link message can comprise various types of information regarding the communication link and/or the received data stream. The reverse link message can be processed by a TX data processor 238, which also receives traffic data for a number of data streams from a data source 236, modulated by a modulator 280, conditioned by transmitters 254a through 254r, and transmitted back to base station 210.

At base station 210, the modulated signals from access terminal 250 are received by antennas 224, conditioned by receivers 222, demodulated by a demodulator 240, and processed by a RX data processor 242 to extract the reverse link message transmitted by access terminal 250. Further, processor 230 can process the extracted message to determine which precoding matrix to use for determining the beamforming weights.

Processors 230 and 270 can direct (*e.g*., control, coordinate, manage, *etc.*) operation at base station 210 and access terminal 250, respectively. Respective processors 230 and 270 can be associated with memory 232 and 272 that store program codes and data. Processors 230 and 270 can also perform computations to derive frequency and impulse response estimates for the uplink and downlink, respectively.

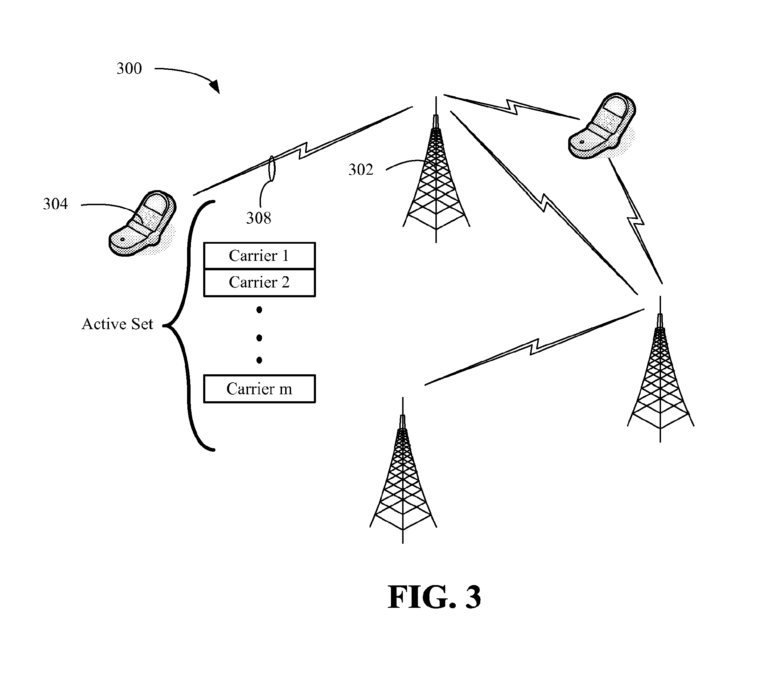

Referring next to Fig. 3, an exemplary system for facilitating radio link failure determinations according to an embodiment is provided. As illustrated, system 300 can comprise one or more base stations 302 in one or more sectors that receive, transmit, repeat, and so forth, wireless communication signals to each other and/or to one or more mobile devices 304. Each base station 302 can comprise multiple transmitter chains and receiver chains (e.g., one for each transmit and receive antenna), each of which can in turn comprise a plurality of components associated with signal transmission and reception (e.g., processors, modulators, multiplexers, demodulators, demultiplexers, antennas, and so forth). Each mobile device 304 can comprise one or more transmitter chains and receiver chains, which can be utilized for a multiple input multiple output (MIMO) system. Moreover, each transmitter and receiver chain can comprise a plurality of components associated with signal transmission and reception (e.g., processors, modulators, multiplexers, demodulators, demultiplexers, antennas, and so on), as will be appreciated by one skilled in the art. As illustrated in Fig. 3, an active set 308 of carriers can be designated for the eNodeB 302, wherein such active set 308 includes a set of carriers that are usable from the point of view of the user equipment. As such, the active set of carriers includes a group of configured carriers that exhibit qualities acceptable to user equipment associated therewith. For example, uplink and downlink carriers can be configured for user equipment, and tracked to identify carriers with acceptable channel qualities, which are then maintained as part of such active set.

In an aspect, downlink radio link quality in communication systems is monitored by the user equipment for the purpose of indicating radio problem detection status to higher layers. In non-DRX (discontinuous reception) mode operations, the physical layer in the user equipment enables every radio frame to check the channel quality measured over a predetermined time window against predetermined thresholds. As such, the user equipment can provide radio problem detection to higher layers when quality is below (e.g., of inferior quality than) a threshold *Qₒᵤₜ,* and continues to do so until the quality is better than the threshold *Qᵢₙ.* It is noted that user equipment may monitor downlink link quality based on a cell-specific reference signal in order to detect the downlink radio link quality of the serving cell. Such link quality can subsequently be compared to the threshold *Qₒᵤₜ,* defined as the level at which the downlink radio link cannot be reliably received (e.g., corresponding to 10% block error rate of a hypothetical Physical Downlink Control Channel transmission taking into account the Physical Control Format Indicator Channel errors with predetermined transmission parameters).

Here, it should be noted that such measurements can be performed for each carrier, and also for cells that the user equipment is connected to. Moreover, user equipment might not be considered to be in radio link failure status unless radio problem detection is declared on all carriers that such user equipment can receive control. For example, the cell that a user equipment is connected to can keep track of the 'reported' problems on the carriers from the multicarrier group (e.g., the 'Active' set of carriers for that user equipment). If the signal quality on the carrier that is out of the active carrier set improves and subsequently falls within the acceptable level, such carrier can then be added to the active carrier set.

In a related aspect, the eNodeB can introduce predetermined values for *Qₒᵤₜ* / *Qᵢₙ* (similar to predetermined values defined on the user equipment side) based on the regular channel quality indicator reports provided by the user equipment. Hence, additional procedures/criteria can be designated at the eNodeB, which may require no additional reports. According to a further aspect, procedures at the eNodeB can be further simplified by not even requiring *Qₒᵤₜ* / *Qᵢₙ* at the eNodeB - e.g., the rule can be designated such that a carrier is considered unusable if the reported channel quality indicator index is zero (i.e., out of range).

In a normal mode, user equipment monitors for one or more anchor carriers (as configured) for Physical Downlink Control Channel. If multiple anchor carriers are configured to monitor for Physical Downlink Control Channel, and link problems are identified on one of them, there will be another carrier that can be employed for Physical Downlink Control Channel and for performing its corresponding actions. Moreover, if there exists only a single carrier configured to monitor for Physical Downlink Control Channel, the reconfiguration message may be sent before the link is lost. Nonetheless, disruptions/problems can occur if the link loss on the only carrier where Physical Downlink Control Channel is configured to be received, fails before the reconfiguration. For example, absent the subject innovation, the user equipment can encounter radio link failure even though there are other carriers on which it could potentially receive Physical Downlink Control Channel.

As such, one aspect of the subject innovation configures the 'secondary' anchor carrier(s). Upon a user equipment identifying problems with the primary carrier(s), such UE can by default monitor secondary carrier(s) for Physical Downlink Control Channel. The eNodeB can further know about the problems on the primary carrier from Channel Quality Indicator feedback, and as such can start transmitting Physical Downlink Control Channel on the secondary carrier(s). As explained earlier and according to another aspect of the subject innovation, rather than configuration of secondary carrier(s), all 'active' carriers for Physical Downlink Control Channel can be monitored after the problem with the primary carrier is identified. Such monitoring can occur for a predetermined period and until the new configuration is received. Moreover, the set of carriers to be monitored can be reduced based on other criterion, such as the best two carriers based on the Channel Quality Indicator feedback. It is to be appreciated that additional Channel Quality Indicator reports, which are specific to the control region, can be evaluated in order to efficiently estimate the channel quality on Physical Downlink Control Channel for the purpose of declaring a carrier usable or not from the control channel point of view. Moreover, additional Channel Quality Indicator feedback can be defined for the purpose of locating the best Physical Downlink Control Channel carrier, which could be regarded as a 'primary' anchor carrier for specific user equipment on which to send cross-carrier assignments. As explained earlier, if user equipment falls into radio link failure status, and when downlink synchronization can not be maintained any more, the cell selection procedure can then be triggered.

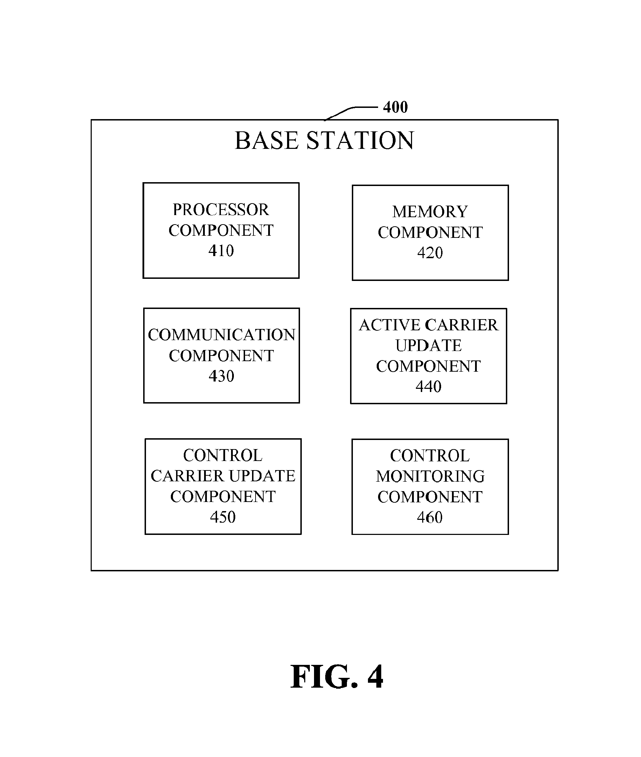

Referring next to Fig. 4, a block diagram of an exemplary base station (e.g., eNodeB) that facilitates a radio link failure determination according to an embodiment is provided. As shown, base station 400 may include processor component 410, memory component 420, communication component 430, active carrier update component 440, control carrier update component 450, and control monitoring component 460.

In one aspect, processor component 410 is configured to execute computer-readable instructions related to performing any of a plurality of functions. Processor component 410 can be a single processor or a plurality of processors dedicated to analyzing information to be communicated from base station 400 and/or generating information that can be utilized by memory component 420, communication component 430, active carrier update component 440, control carrier update component 450, and/or control monitoring component 460. Additionally or alternatively, processor component 410 may be configured to control one or more components of base station 400.

In another aspect, memory component 420 is coupled to processor component 410 and configured to store computer-readable instructions executed by processor component 410. Memory component 420 may also be configured to store any of a plurality of other types of data including generated by any of communication component 430, active carrier update component 440, control carrier update component 450, and/or control monitoring component 460. Memory component 420 can be configured in a number of different configurations, including as random access memory, battery-backed memory, hard disk, magnetic tape, etc. Various features can also be implemented upon memory component 420, such as compression and automatic back up (e.g., use of a Redundant Array of Independent Drives configuration).

In yet another aspect, base station 400 includes communication component 430, which is coupled to processor component 410 and configured to interface base station 400 with external entities. For instance, communication component 430 may be configured to receive a set of channel quality indicator measurements associated with a set of configured downlink carriers monitored by a wireless terminal.

As illustrated, base station 400 may also include active carrier update component 440 and control carrier update component 450. Within such embodiment, active carrier update component 440 may be configured to update an active set of carriers based on the set of channel quality indicator measurements, whereas control carrier update component 450 may be configured to ascertain a set of control carriers based on an updated active set of carriers. Here, it should be noted that the active set of carriers is an active carrier subset of the set of configured downlink carriers, whereas the set of control carriers is a control carrier subset of the updated active set of carriers. It should be further noted that active carrier update component 440 and/or control carrier update component 450 may be configured to perform updates in any of various ways. For instance, active carrier update component 440 and/or control carrier update component 450 may be configured to make a comparison between the set of channel quality indicator measurements and a threshold, wherein the active set of carriers and/or the set of control carriers are updated based on the comparison.

In an aspect, embodiments for removing carriers from the active set of carriers and/or the set of control carriers are contemplated. For instance, based on a comparison to a threshold quality parameter, active carrier update component 440 may deem a particular carrier "unusable". If so, active carrier update component 440 may be configured to remove the unusable carrier from the active set of carriers. Similarly, if control carrier update component 450 deems the unusable carrier inadequate for control transmissions, control carrier update component 450 may be configured to remove the unusable carrier from the set of control carriers. If the unusable carrier is indeed removed from the set of control carriers, a reconfiguring of the wireless terminal may then be performed, wherein control monitoring component 460 is configured to reconfigure the wireless terminal to not track control signals over the unusable carrier. Within such embodiment, the process may then further include ceasing to transmit the control signal over the unusable carrier, wherein communication component 430 is configured to cease such transmission.

Embodiments for adding carriers to the active set of carriers and/or the set of control carriers are also contemplated. For instance, based on an analysis of the channel quality indicator measurements, active carrier update component 440 may be configured to add a new carrier to the active set of carriers (e.g., because the quality of the new carrier exceeds a quality threshold, because the quality of the new carrier exceeds the quality of a carrier currently included in the active set, etc.). Similarly, if control carrier update component 450 deems the new carrier adequate for control transmissions, control carrier update component 450 may be configured to add the new carrier to the set of control carriers. If the new carrier is indeed added to the set of control carriers, control monitoring component 460 may be configured to reconfigure a wireless terminal to track control signals over the new carrier, and communication component 430 may be configured to transmit the control signal over the new carrier.

As illustrated, base station 400 may further include control monitoring component 460. Within such embodiment, control monitoring component 460 may be configured to direct a wireless terminal to monitor a control signal over at least one carrier in the set of control carriers. In an aspect, control monitoring component 460 may be configured to generate a monitoring scheme, wherein a configuring of a wireless terminal may include providing the monitoring scheme to the wireless terminal. Moreover, within such embodiment, the monitoring scheme may be provided via communication component 430 to facilitate an identification of at least one carrier for the wireless terminal to monitor.

In a particular embodiment, control monitoring component 460 is configured to generate a monitoring scheme directing a wireless terminal to monitor a control signal over at least one primary carrier. Here, it should be noted that the at least one primary carrier is included in the set of control carriers. To this end, it should be further noted that the monitoring scheme may direct the wireless terminal to monitor a single primary carrier and/or a set of primary carriers. For example, if the monitoring scheme directs the wireless terminal to monitor a single primary carrier, the radio link failure determination can be based on a link loss detected over the single primary carrier. However, if the monitoring scheme directs the wireless terminal to monitor a first primary carrier and a second primary carrier, the radio link failure determination can be based on a first link loss detected over the first primary carrier and a second link loss detected over the second primary carrier.

In another embodiment, rather than declaring a radio link failure based solely on the set of control carriers, the monitoring scheme may direct the wireless terminal to monitor at least one additional carrier, not included in the set of control carriers, in response to a link loss detected over each of the set of control carriers. Within such embodiment, communication component 430 may then be configured to transmit the control signal on the at least one additional carrier. In an aspect, the monitoring scheme for this embodiment can direct the wireless terminal to select at least one of a secondary set of carriers to be the at least one additional carrier, wherein the secondary set of carriers is a secondary carrier subset of the configured downlink carriers which does not include set of control carriers. In another aspect, the monitoring scheme may direct the wireless terminal to monitor each carrier in the set of configured downlink carriers in response to a link loss detected over each of the set of control carriers. For this particular embodiment, a re-configuring of the wireless terminal may be performed to reduce the number of monitored control carriers, wherein such reduction is based on a channel quality assessment of the set of monitored control carriers.

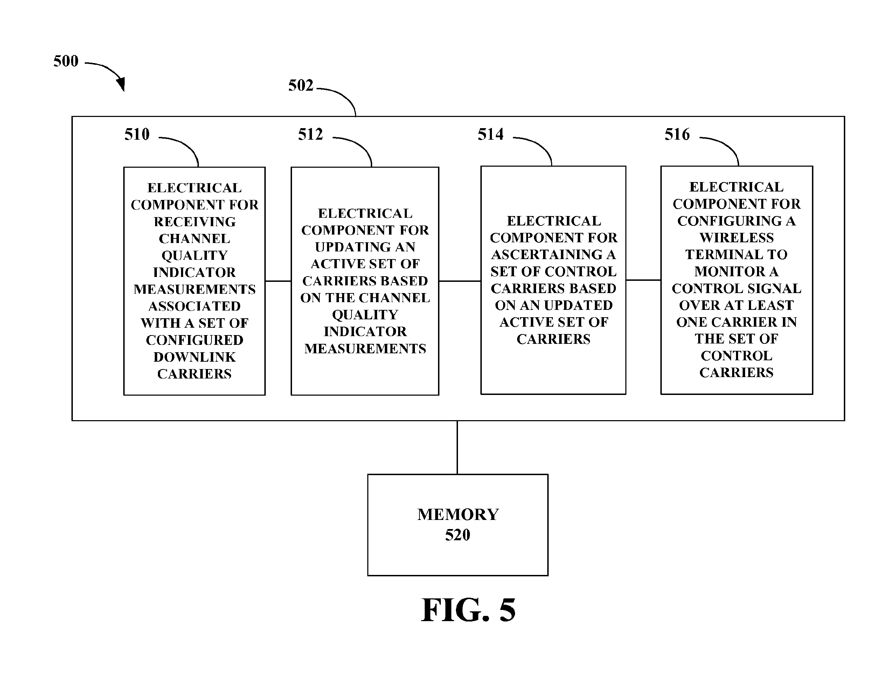

Turning to Fig. 5, illustrated is a system 500 that facilitates determining radio link failure according to an embodiment. System 500 and/or instructions for implementing system 500 can reside within a network entity (e.g., base station 400) or a computer-readable storage medium, for instance. As depicted, system 500 includes functional blocks that can represent functions implemented by a processor, software, or combination thereof (e.g., firmware). System 500 includes a logical grouping 502 of electrical components that can act in conjunction. As illustrated, logical grouping 502 can include an electrical component for receiving channel quality indicator measurements associated with a set of configured downlink carriers monitored 510, as well as an electrical component for updating an active set of carriers based on the channel quality indicator measurements 512. Logical grouping 502 can also include an electrical component for ascertaining a set of control carriers based on an updated active set of carriers 514. Further, logical grouping 502 can include an electrical component for configuring a wireless terminal to monitor a control signal over at least one carrier in the set of control carriers 516.. Additionally, system 500 can include a memory 520 that retains instructions for executing functions associated with electrical components 510, 512, 514, and 516. While shown as being external to memory 520, it is to be understood that electrical components 510, 512, 514, and 516 can exist within memory 520.

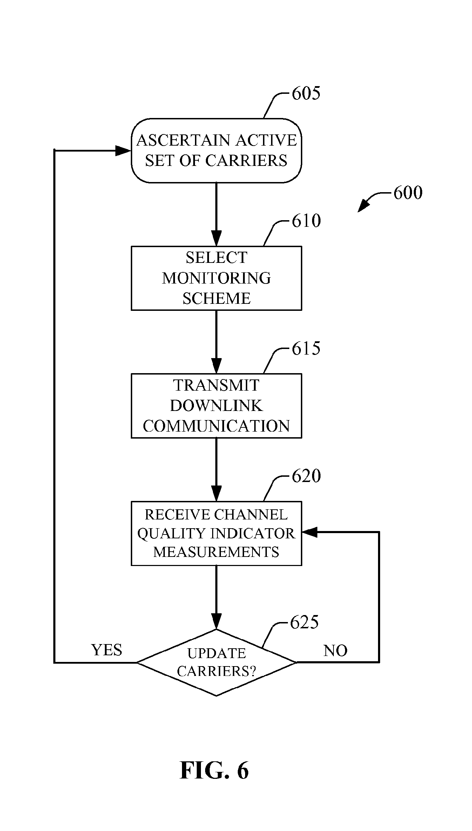

Referring next to Fig. 6, a flow chart illustrating an exemplary method for facilitating a radio link failure determination is provided. As illustrated, process 600 includes a series of acts that may be performed by various components of a network entity (e.g., base station 400) according to an aspect of the subject specification. Process 600 may be implemented by employing at least one processor to execute computer executable instructions stored on a computer readable storage medium to implement the series of acts. In another embodiment, a computer-readable storage medium comprising code for causing at least one computer to implement the acts of process 600 are contemplated.

As illustrated, process 600 begins with an active set of carriers being ascertained for a wireless terminal at act 605. Process 600 then proceeds with the selection of an appropriate monitoring scheme at act 610. In an aspect, such monitoring scheme indicates a carrier (or set of carriers) from which a wireless terminal should monitor a control signal. Here, since wireless terminals may have different capabilities (e.g., legacy UEs, non-legacy UEs, etc.) and/or may be operating under different conditions (e.g., interference conditions, bandwidth conditions, etc.) it is contemplated that the monitoring scheme selected at act 610 may vary. Next, at act 615, a downlink communication is transmitted to the wireless terminal, which identifies both a set of control carriers and the desired monitoring scheme for monitoring a control signal within the downlink communication.

After configuring the wireless terminal, a base station may begin to receive channel quality indicator measurements from the wireless terminal at act 620. Here, it is noted that the received channel quality indicator measurements are associated with any of the configured downlink carriers associated with the wireless terminal, which includes the set of control carriers, as well as non-control carriers. Process 600 then proceeds to act 625 where the base station determines whether to update the active set of carriers (and perhaps also the set of control carriers) based on the received channel quality indicator measurements. If an update is not desired at act 625, process 600 loops back to act 620 where channel quality indicator measurements associated with the currently monitored carrier(s) continue to be received. However, if an update is indeed desired at act 625, process 600 loops back to act 605 where an updated active set of carriers is ascertained. In an aspect, the set of control carriers may then be updated, if desired, once the active set of carriers has been updated.

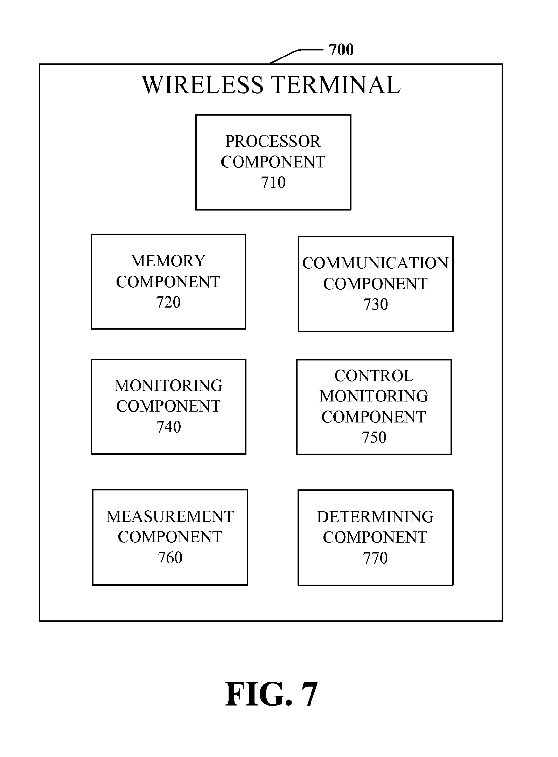

Referring next to Fig. 7, a block diagram illustrates an exemplary wireless terminal that facilitates determining radio link failure in accordance with various aspects. As illustrated, wireless terminal 700 may include processor component 710, memory component 720, communication component 730, monitoring component 740, control monitoring component 750, measurement component 760, and determining component 770.

Similar to processor component 410 in base station 400, processor component 710 is configured to execute computer-readable instructions related to performing any of a plurality of functions. Processor component 710 can be a single processor or a plurality of processors dedicated to analyzing information to be communicated from wireless terminal 700 and/or generating information that can be utilized by memory component 720, communication component 730, monitoring component 740, control monitoring component 750, measurement component 760, and/or determining component 770. Additionally or alternatively, processor component 710 may be configured to control one or more components of wireless terminal 700.

In another aspect, memory component 720 is coupled to processor component 710 and configured to store computer-readable instructions executed by processor component 710. Memory component 720 may also be configured to store any of a plurality of other types of data including data generated by any of communication component 730, monitoring component 740, control monitoring component 750, measurement component 760, and/or determining component 770. Here, it should be noted that memory component 720 is analogous to memory component 420 in base station 400. Accordingly, it should be appreciated that any of the aforementioned features/configurations of memory component 420 are also applicable to memory component 720.

In yet another aspect, wireless terminal 700 includes communication component 730, which is coupled to processor component 710 and configured to interface wireless terminal 700 with external entities. For instance, communication component 730 may be configured to receive a downlink communication from a network entity (e.g., base station 400). For this particular embodiment, the downlink communication is received via a set of configured downlink carriers.

As illustrated, wireless terminal 700 may also include monitoring component 740 and channel monitoring component 750. Within such embodiment, monitoring component 740 is configured to monitor a channel quality of a received signal over the set of configured downlink carriers (wherein the received signal can be any of a plurality of types of signals including, for example, a control signal, a reference signal, a data signal, or the like), whereas channel monitoring component 750 may be configured to track a control channel quality of a control signal over at least one carrier. In an aspect, it is noted that the received signal (e.g., a reference signal) can be used to predict/map the control channel quality monitored by channel monitoring component 750. Moreover, the subject specification contemplates embodiments which include indirectly tracking control channel quality without actually measuring the control-Physical Downlink Control Channel-channel quality directly.

To this end, as stated previously with respect to non-DRX mode operations, the physical layer in the user equipment enables every radio frame to check the channel quality measured over a predetermined time window against predetermined thresholds. As such, the user equipment can provide radio problem detection to higher layers when quality is below (e.g., of inferior quality than) a threshold *Qₒᵤₜ,* and continues to do so until the quality is better than the threshold *Qᵢₙ.* It is noted that user equipment may monitor downlink link quality based on a cell-specific reference signal in order to detect the downlink radio link quality of the serving cell. Such link quality can subsequently be compared to the threshold *Qₒᵤₜ,* defined as the level at which the downlink radio link cannot be reliably received (e.g., corresponding to 10% block error rate of a hypothetical Physical Downlink Control Channel transmission taking into account the Physical Control Format Indicator Channel errors with predetermined transmission parameters).

In an aspect, it is further noted that channel monitoring component 750 may be configured to select which carrier(s) to monitor independently, and/or according to a monitoring scheme included in the downlink communication. It should be further noted that channel monitoring component 750 may be configured to monitor any of the set of configured downlink carriers including carriers within a set of control carriers, as well as carriers not included in the set of control carriers.

In a first aspect, channel monitoring component 750 may be configured to monitor at least one primary carrier, wherein the at least one primary carrier is included in a set of control carriers, and wherein the set of control carriers is included in the set of configured downlink carriers. For this particular embodiment, channel monitoring component 750 can be configured to monitor a control channel quality of a control signal over a single primary carrier and/or a set of primary carriers. For example, if channel monitoring component 750 is configured to monitor a single primary carrier, the radio link failure determination can be based on a link loss detected over the single primary carrier. However, if channel monitoring component 750 is configured to monitor a first primary carrier and a second primary carrier, the radio link failure determination can be based on a first link loss detected over the first primary carrier and a second link loss detected over the second primary carrier.

In another aspect, rather than declaring a radio link failure based solely on the set of control carriers, channel monitoring component 750 is configured to monitor a control channel quality of a control signal over at least one additional carrier not included in the set of control carriers. Within such embodiment, the at least one additional carrier is selected in response to a link loss detected over each of the set of control carriers. For instance, channel monitoring component 750 can be configured to declare at least one of a set of secondary carriers to be the at least one additional carrier, wherein the secondary carrier is included in a secondary carrier subset of the set of configured downlink carriers which does not include the set of control carriers. Alternatively, channel monitoring component 750 can be configured to monitor the control channel quality of a control signal over each configured downlink carrier in response to a link loss detected over each of the control carriers. In an aspect, an algorithm for reducing the set of monitored control carriers can also be implemented via channel monitoring component 750 according to a received configuration message, wherein the received configuration message is based on a set of channel quality indicator measurements ascertained by wireless terminal 700.

In another aspect, wireless terminal 700 includes determining component 770. Within such embodiment, determining component 770 is configured to perform a radio link failure determination based on the control channel quality ascertained by control monitoring component 750. For instance, the radio link failure determination can be based on comparing the control channel quality to a threshold, wherein determining component 770 is configured to perform such comparison.

As illustrated, wireless terminal 700 may further include measurement component 760. Within such embodiment, measurement component 760 is configured to ascertain a set of channel quality indicator measurements associated with any of the configured downlink carriers. Once the set of channel quality indicator measurements is ascertained, it should be noted that communication component 730 can be further configured to report the set of channel quality indicator measurements to an external entity, wherein such reporting can be directed towards a network entity (e.g., to base station 400).

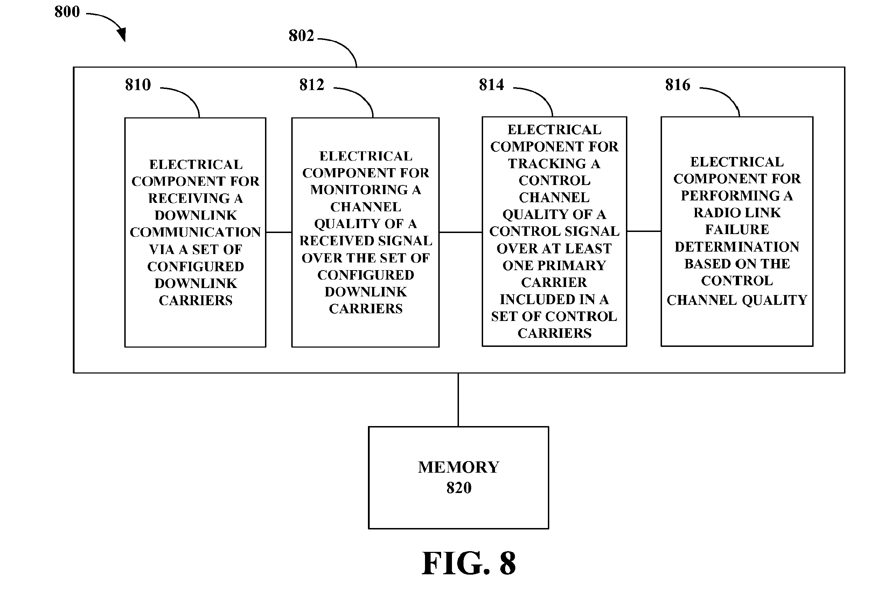

Turning to Fig. 8, illustrated is a system 800 that facilitates determining radio link failure according to an embodiment. System 800 and/or instructions for implementing system 800 can reside within a user equipment (e.g., wireless terminal 700) or a computer-readable storage medium, for instance. As depicted, system 800 includes functional blocks that can represent functions implemented by a processor, software, or combination thereof (e.g., firmware). System 800 includes a logical grouping 802 of electrical components that can act in conjunction. As illustrated, logical grouping 802 can include an electrical component for receiving a downlink communication via a set of configured downlink carriers 810, as well as an electrical component for monitoring a channel quality of a received signal over the set of configured downlink carriers 812. Furthermore, logical grouping 802 can include an electrical component for tracking a control channel quality of a control signal over at least one primary carrier included in a set of control carriers 814. Logical grouping 802 can also include an electrical component for performing a radio link failure determination based on the control channel quality 816. Additionally, system 800 can include a memory 820 that retains instructions for executing functions associated with electrical components 810, 812, 814, and 816. While shown as being external to memory 820, it is to be understood that electrical components 810, 812, 814, and 816 can exist within memory 820.

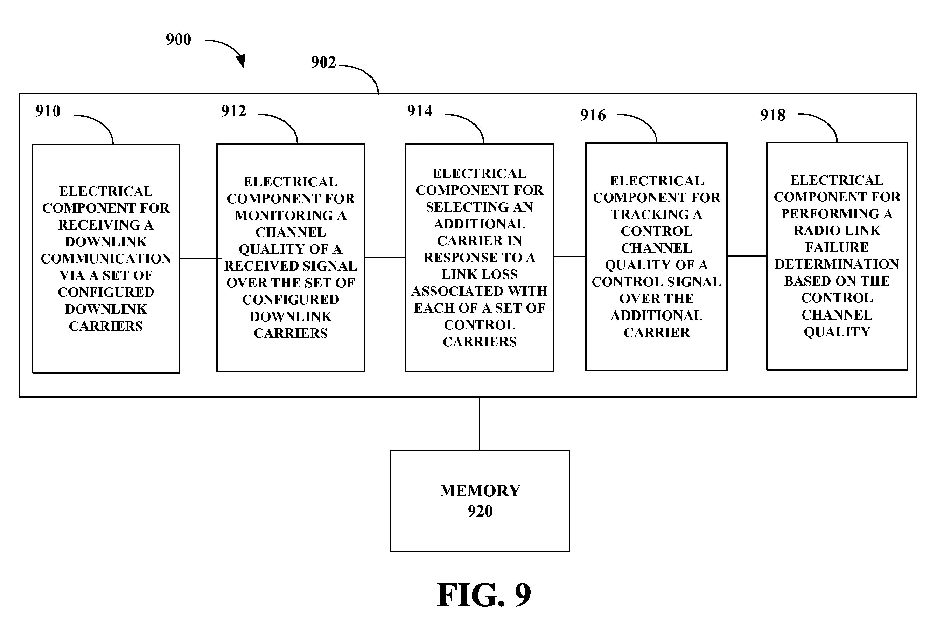

Referring next to Fig. 9, illustrated is another system 900 that facilitates determining radio link failure according to an embodiment. System 900 and/or instructions for implementing system 900 can also reside within a user equipment (e.g., wireless terminal 700) or a computer-readable storage medium, for instance, wherein system 900 includes functional blocks that can represent functions implemented by a processor, software, or combination thereof (*e.g*., firmware). Moreover, system 900 includes a logical grouping 902 of electrical components that can act in conjunction similar to logical grouping 802 in system 800. As illustrated, logical grouping 902 can include an electrical component for receiving a downlink communication via a set of configured downlink carriers 910, as well as an electrical component for monitoring a channel quality of a received signal over the set of configured downlink carriers 912. Logical grouping 902 can also include an electrical component for selecting an additional carrier in response to a link loss associated with each of a set of control carriers 914. Further, logical grouping 902 can include an electrical component for tracking a control channel quality of a control signal over the additional carrier 916, as well as an electrical component for performing a radio link failure determination based on the control channel quality 918. Additionally, system 900 can include a memory 920 that retains instructions for executing functions associated with electrical components 910, 912, 914, 916, and 918. While shown as being external to memory 920, it is to be understood that electrical components 910, 912, 914, 916, and 918 can exist within memory 920.

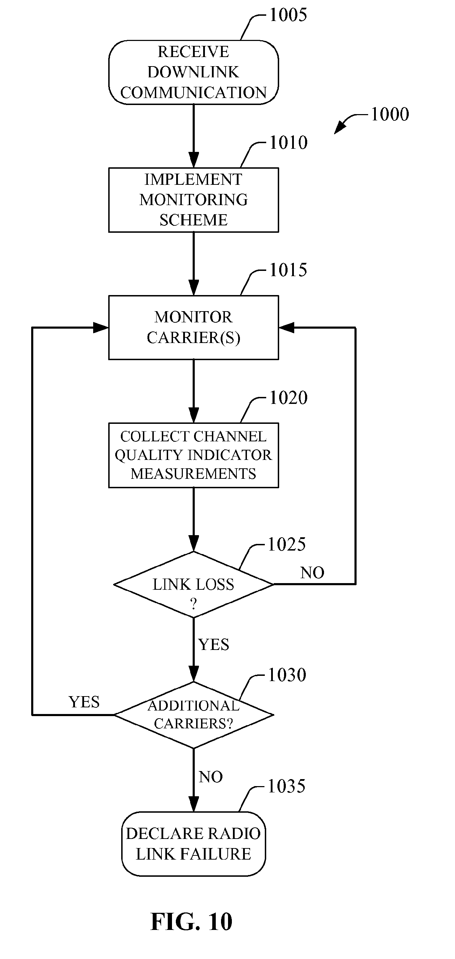

Referring next to Fig. 10, a flow chart illustrating an exemplary method for facilitating a radio link failure determination is provided. As illustrated, process 1000 includes a series of acts that may be performed by various components of a user equipment (e.g., wireless terminal 700) according to an aspect of the subject specification. Process 1000 may be implemented by employing at least one processor to execute computer executable instructions stored on a computer readable storage medium to implement the series of acts. In another embodiment, a computer-readable storage medium comprising code for causing at least one computer to implement the acts of process 1000 are contemplated.

As illustrated, process 1000 begins with the wireless terminal receiving a downlink communication from a network entity (e.g., from base station 400) at act 1005. In an aspect, the downlink communication includes an indication of a set of control carriers associated with the wireless terminal, wherein the control carriers are a subset of the configured downlink carriers for the wireless terminal. Next, at act 1010, the wireless terminal implements a desired monitoring scheme for monitoring a control signal within the downlink communication. To this end, although the monitoring scheme may be pre-configured to include such monitoring scheme, it should be noted that the monitoring scheme may also be included in the downlink communication received from the network entity. Since wireless terminals may have different capabilities (e.g., legacy UEs, non-legacy UEs, etc.) and/or may be operating under different conditions (e.g., interference conditions, bandwidth conditions, etc.) it is contemplated that any of various monitoring schemes may be implemented at act 1010.

Next, at act 1015, process 1000 proceeds with a monitoring of the configured downlink carriers. Process 1000 then proceeds to act 1020 where the wireless terminal collects channel quality indicator measurements associated with the configured downlink carriers. Process 1000 then proceeds to act 1025 where a link loss determination is performed based on a control channel quality assessment of at least one of the control carriers. For instance, in an aspect, act 1025 may include comparing the control channel quality to a threshold, wherein the link loss determination is based on such comparison.

If no link loss is determined at act 1025, process 1000 loops back to act 1015 where the currently monitored carrier(s) continue to be monitored. However, if a link loss is indeed determined at act 1025, process 1000 proceeds to act 1030 to determine whether additional carriers should be monitored for the control signal. For instance, in a particular embodiment, it may be desirable to declare a radio link failure after ascertaining a link loss over a primary carrier whereas, in another embodiment, it may be desirable to have the wireless terminal monitor additional carriers (not included in the set of control carriers) in response to the link loss detected over each of the set of control carriers. If no additional carriers are monitored for the control signal, process 1000 proceeds to act 1035 where a radio link failure is declared. Otherwise, process 1000 loops back to act 1015 where the control signal is monitored over the additional carriers (e.g., a second primary carrier, a set of secondary carriers, all configured downlink carriers, etc.).

### EXEMPLARY COMMUNICATION SYSTEM

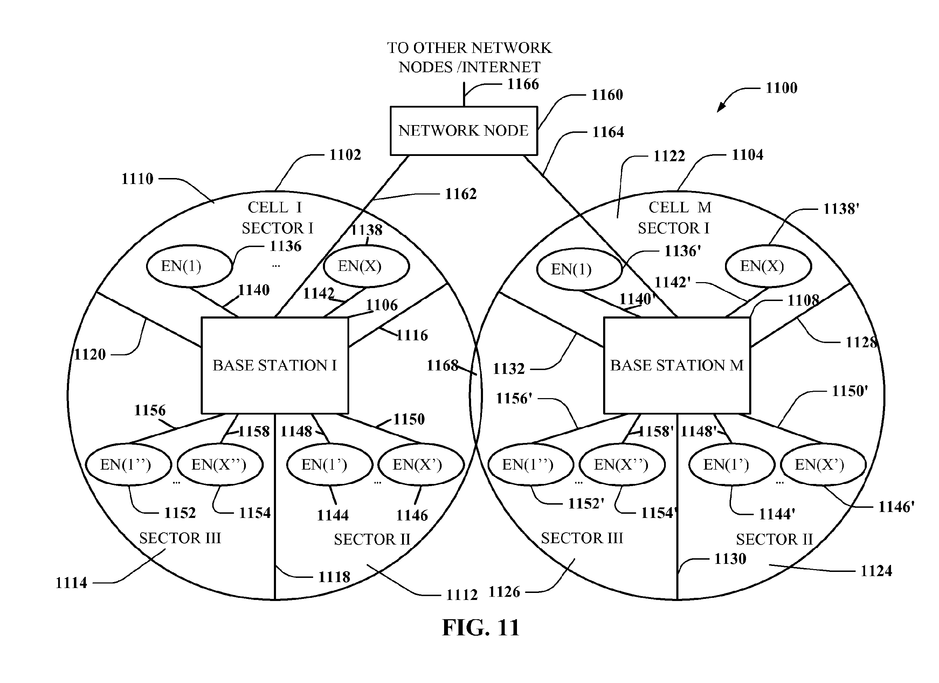

Referring next to Fig. 11, an exemplary communication system 1100 implemented in accordance with various aspects is provided including multiple cells: cell I 1102, cell M 1104. Here, it should be noted that neighboring cells 1102, 1104 overlap slightly, as indicated by cell boundary region 1168, thereby creating potential for signal interference between signals transmitted by base stations in neighboring cells. Each cell 1102, 1104 of system 1100 includes three sectors. Cells which have not been subdivided into multiple sectors (N=1), cells with two sectors (N=2) and cells with more than 3 sectors (N>3) are also possible in accordance with various aspects. Cell 1102 includes a first sector, sector I 1110, a second sector, sector II 1112, and a third sector, sector III 1114. Each sector 1110, 1112, and 1114 has two sector boundary regions; each boundary region is shared between two adjacent sectors.

Sector boundary regions provide potential for signal interference between signals transmitted by base stations in neighboring sectors. Line 1116 represents a sector boundary region between sector 11110 and sector II 1112; line 1118 represents a sector boundary region between sector II 1112 and sector III 1114; line 1120 represents a sector boundary region between sector III 1114 and sector 1 1110. Similarly, cell M 1104 includes a first sector, sector I 1122, a second sector, sector II 1124, and a third sector, sector III 1126. Line 1128 represents a sector boundary region between sector I 1122 and sector II 1124; line 1130 represents a sector boundary region between sector II 1124 and sector III 1126; line 1132 represents a boundary region between sector III 1126 and sector I 1122. Cell I 1102 includes a base station (BS), base station I 1106, and a plurality of end nodes (ENs) in each sector 1110, 1112, 1114. Sector I 1110 includes EN(1) 1136 and EN(X) 1138 coupled to BS 1106 *via* wireless links 1140, 1142, respectively; sector II 1112 includes EN(1') 1144 and EN(X') 1146 coupled to BS 1106 *via* wireless links 1148, 1150, respectively; sector III 1114 includes EN(1") 1152 and EN(X") 1154 coupled to BS 1106 *via* wireless links 1156, 1158, respectively. Similarly, cell M 1104 includes base station M 1108, and a plurality of end nodes (ENs) in each sector 1122, 1124, and 1126. Sector I 1122 includes EN(1) 1136' and EN(X) 1138' coupled to BS M 1108 *via* wireless links 1140', 1142', respectively; sector II 1124 includes EN(1') 1144' and EN(X') 1146' coupled to BS M 1108 *via* wireless links 1148', 1150', respectively; sector 3 1126 includes EN(1") 1152' and EN(X") 1154' coupled to BS 1108 *via* wireless links 1156', 1158', respectively.

System 1100 also includes a network node 1160 which is coupled to BS I 1106 and BS M 1108 *via* network links 1162, 1164, respectively. Network node 1160 is also coupled to other network nodes, *e.g*., other base stations, AAA server nodes, intermediate nodes, routers, etc. and the Internet *via* network link 1166. Network links 1162, 1164, 1166 may be, *e.g.,* fiber optic cables. Each end node, *e.g.* EN 1 1136 may be a wireless terminal including a transmitter as well as a receiver. The wireless terminals, *e.g*., EN(1) 1136 may move through system 1100 and may communicate *via* wireless links with the base station in the cell in which the EN is currently located. The wireless terminals, (WTs), *e.g.* EN(1) 1136, may communicate with peer nodes, *e.g.,* other WTs in system 1100 or outside system 1100 *via* a base station, *e.g.* BS 1106, and/or network node 1160. WTs, *e.g*., EN(1) 1136 may be mobile communications devices such as cell phones, personal data assistants with wireless modems, etc. Respective base stations perform tone subset allocation using a different method for the strip-symbol periods, from the method employed for allocating tones and determining tone hopping in the rest symbol periods, *e.g*., non strip-symbol periods. The wireless terminals use the tone subset allocation method along with information received from the base station, *e.g*., base station slope ID, sector ID information, to determine tones that they can employ to receive data and information at specific strip-symbol periods. The tone subset allocation sequence is constructed, in accordance with various aspects to spread inter-sector and inter-cell interference across respective tones. Although the subject system was described primarily within the context of cellular mode, it is to be appreciated that a plurality of modes may be available and employable in accordance with aspects described herein.

### EXEMPLARY BASE STATION

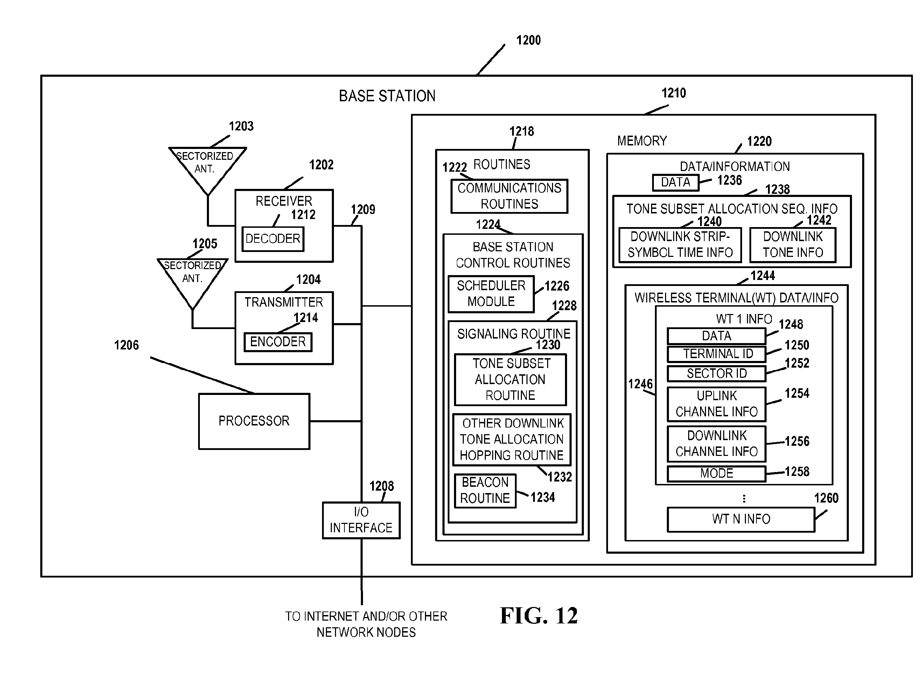

Fig. 12 illustrates an example base station 1200 in accordance with various aspects. Base station 1200 implements tone subset allocation sequences, with different tone subset allocation sequences generated for respective different sector types of the cell. Base station 1200 may be used as any one of base stations 1106, 1108 of the system 1100 of Figure 11. The base station 1200 includes a receiver 1202, a transmitter 1204, a processor 1206, e.g., CPU, an input/output interface 1208 and memory 1210 coupled together by a bus 1209 over which various elements 1202, 1204, 1206, 1208, and 1210 may interchange data and information.

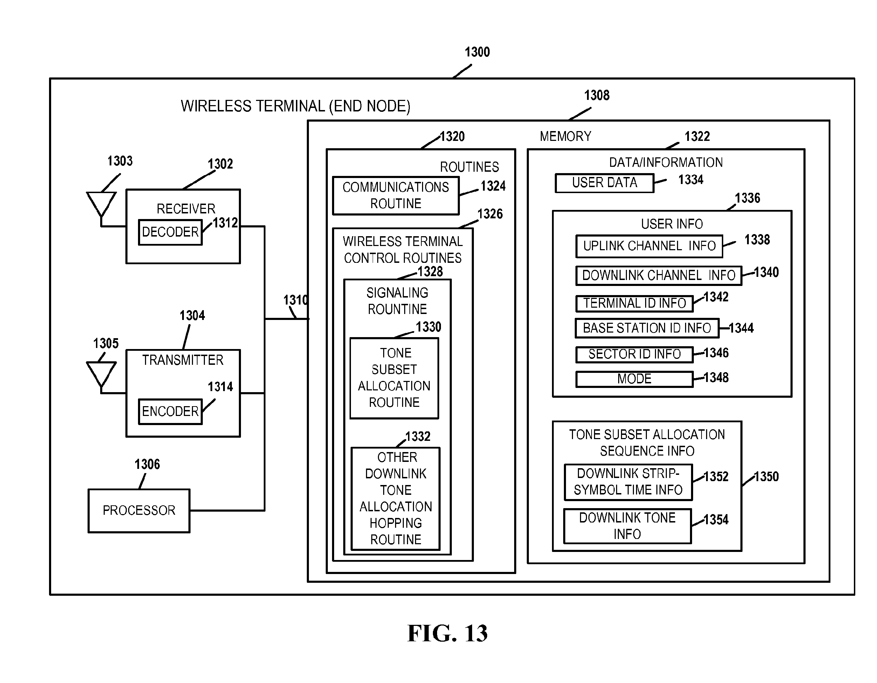

Sectorized antenna 1203 coupled to receiver 1202 is used for receiving data and other signals, e.g., channel reports, from wireless terminals transmissions from each sector within the base station's cell. Sectorized antenna 1205 coupled to transmitter 1204 is used for transmitting data and other signals, e.g., control signals, pilot signal, beacon signals, etc. to wireless terminals 1300 (see Figure 13) within each sector of the base station's cell. In various aspects, base station 1200 may employ multiple receivers 1202 and multiple transmitters 1204, e.g., an individual receivers 1202 for each sector and an individual transmitter 1204 for each sector. Processor 1206, may be, e.g., a general purpose central processing unit (CPU). Processor 1206 controls operation of base station 1200 under direction of one or more routines 1218 stored in memory 1210 and implements the methods. I/O interface 1208 provides a connection to other network nodes, coupling the BS 1200 to other base stations, access routers, AAA server nodes, etc., other networks, and the Internet. Memory 1210 includes routines 1218 and data/information 1220.

Data/ information 1220 includes data 1236, tone subset allocation sequence information 1238 including downlink strip-symbol time information 1240 and downlink tone information 1242, and wireless terminal (WT) data/info 1244 including a plurality of sets of WT information: WT 1 info 1246 and WT N info 1260. Each set of WT info, e.g., WT 1 info 1246 includes data 1248, terminal ID 1250, sector ID 1252, uplink channel information 1254, downlink channel information 1256, and mode information 1258.

Routines 1218 include communications routines 1222 and base station control routines 1224. Base station control routines 1224 includes a scheduler module 1226 and signaling routines 1228 including a tone subset allocation routine 1230 for strip-symbol periods, other downlink tone allocation hopping routine 1232 for the rest of symbol periods, e.g., non strip-symbol periods, and a beacon routine 1234.

Data 1236 includes data to be transmitted that will be sent to encoder 1214 of transmitter 1204 for encoding prior to transmission to WTs, and received data from WTs that has been processed through decoder 1212 of receiver 1202 following reception. Downlink strip-symbol time information 1240 includes the frame synchronization structure information, such as the superslot, beaconslot, and ultraslot structure information and information specifying whether a given symbol period is a strip-symbol period, and if so, the index of the strip-symbol period and whether the strip-symbol is a resetting point to truncate the tone subset allocation sequence used by the base station. Downlink tone information 1242 includes information including a carrier frequency assigned to the base station 1200, the number and frequency of tones, and the set of tone subsets to be allocated to the strip-symbol periods, and other cell and sector specific values such as slope, slope index and sector type.

Data 1248 may include data that WT1 1300 has received from a peer node, data that WT 1 1300 desires to be transmitted to a peer node, and downlink channel quality report feedback information. Terminal ID 1250 is a base station 1200 assigned ID that identifies WT 1 1300. Sector ID 1252 includes information identifying the sector in which WT1 1300 is operating. Sector ID 1252 can be used, for example, to determine the sector type. Uplink channel information 1254 includes information identifying channel segments that have been allocated by scheduler 1226 for WT1 1300 to use, e.g., uplink traffic channel segments for data, dedicated uplink control channels for requests, power control, timing control, etc. Each uplink channel assigned to WT1 1300 includes one or more logical tones, each logical tone following an uplink hopping sequence. Downlink channel information 1256 includes information identifying channel segments that have been allocated by scheduler 1226 to carry data and/or information to WT1 1300, e.g., downlink traffic channel segments for user data. Each downlink channel assigned to WT1 1300 includes one or more logical tones, each following a downlink hopping sequence. Mode information 1258 includes information identifying the state of operation of WT1 1300, e.g. sleep, hold, on.

Communications routines 1222 control the base station 1200 to perform various communications operations and implement various communications protocols. Base station control routines 1224 are used to control the base station 1200 to perform basic base station functional tasks, e.g., signal generation and reception, scheduling, and to implement the steps of the method of some aspects including transmitting signals to wireless terminals using the tone subset allocation sequences during the strip-symbol periods.

Signaling routine 1228 controls the operation of receiver 1202 with its decoder 1212 and transmitter 1204 with its encoder 1214. The signaling routine 1228 is responsible controlling the generation of transmitted data 1236 and control information. Tone subset allocation routine 1230 constructs the tone subset to be used in a strip-symbol period using the method of the aspect and using data/info 1220 including downlink strip-symbol time info 1240 and sector ID 1252. The downlink tone subset allocation sequences will be different for each sector type in a cell and different for adjacent cells. The WTs 1300 receive the signals in the strip-symbol periods in accordance with the downlink tone subset allocation sequences; the base station 1200 uses the same downlink tone subset allocation sequences in order to generate the transmitted signals. Other downlink tone allocation hopping routine 1232 constructs downlink tone hopping sequences, using information including downlink tone information 1242, and downlink channel information 1256, for the symbol periods other than the strip-symbol periods. The downlink data tone hopping sequences are synchronized across the sectors of a cell. Beacon routine 1234 controls the transmission of a beacon signal, e.g., a signal of relatively high power signal concentrated on one or a few tones, which may be used for synchronization purposes, e.g., to synchronize the frame timing structure of the downlink signal and therefore the tone subset allocation sequence with respect to an ultra-slot boundary.

### EXEMPLARY WIRELESS TERMINAL

Fig. 13 illustrates an example wireless terminal (end node) 1300 which can be used as any one of the wireless terminals (end nodes), e.g., EN(1) 1136, of the system 1100 shown in Fig. 11. Wireless terminal 1300 implements the tone subset allocation sequences. The wireless terminal 1300 includes a receiver 1302 including a decoder 1312, a transmitter 1304 including an encoder 1314, a processor 1306, and memory 1308 which are coupled together by a bus 1310 over which the various elements 1302, 1304, 1306, 1308 can interchange data and information. An antenna 1303 used for receiving signals from a base station (and/or a disparate wireless terminal) is coupled to receiver 1302. An antenna 1305 used for transmitting signals, e.g., to a base station (and/or a disparate wireless terminal) is coupled to transmitter 1304.

The processor 1306, e.g., a CPU controls the operation of the wireless terminal 1300 and implements methods by executing routines 1320 and using data/information 1322 in memory 1308.

Data/information 1322 includes user data 1334, user information 1336, and tone subset allocation sequence information 1350. User data 1334 may include data, intended for a peer node, which will be routed to encoder 1314 for encoding prior to transmission by transmitter 1304 to a base station, and data received from the base station which has been processed by the decoder 1312 in receiver 1302. User information 1336 includes uplink channel information 1338, downlink channel information 1340, terminal ID information 1342, base station ID information 1344, sector ID information 1346, and mode information 1348. Uplink channel information 1338 includes information identifying uplink channels segments that have been assigned by a base station for wireless terminal 1300 to use when transmitting to the base station. Uplink channels may include uplink traffic channels, dedicated uplink control channels, e.g., request channels, power control channels and timing control channels. Each uplink channel includes one or more logic tones, each logical tone following an uplink tone hopping sequence. The uplink hopping sequences are different between each sector type of a cell and between adjacent cells. Downlink channel information 1340 includes information identifying downlink channel segments that have been assigned by a base station to WT 1300 for use when the base station is transmitting data/information to WT 1300. Downlink channels may include downlink traffic channels and assignment channels, each downlink channel including one or more logical tone, each logical tone following a downlink hopping sequence, which is synchronized between each sector of the cell.

User info 1336 also includes terminal ID information 1342, which is a base station-assigned identification, base station ID information 1344 which identifies the specific base station that WT has established communications with, and sector ID info 1346 which identifies the specific sector of the cell where WT 1300 is presently located. Base station ID 1344 provides a cell slope value and sector ID info 1346 provides a sector index type; the cell slope value and sector index type may be used to derive tone hopping sequences. Mode information 1348 also included in user info 1336 identifies whether the WT 1300 is in sleep mode, hold mode, or on mode.

Tone subset allocation sequence information 1350 includes downlink strip-symbol time information 1352 and downlink tone information 1354. Downlink strip-symbol time information 1352 include the frame synchronization structure information, such as the superslot, beaconslot, and ultraslot structure information and information specifying whether a given symbol period is a strip-symbol period, and if so, the index of the strip-symbol period and whether the strip-symbol is a resetting point to truncate the tone subset allocation sequence used by the base station. Downlink tone info 1354 includes information including a carrier frequency assigned to the base station, the number and frequency of tones, and the set of tone subsets to be allocated to the strip-symbol periods, and other cell and sector specific values such as slope, slope index and sector type.

Routines 1320 include communications routines 1324 and wireless terminal control routines 1326. Communications routines 1324 control the various communications protocols used by WT 1300. Wireless terminal control routines 1326 controls basic wireless terminal 1300 functionality including the control of the receiver 1302 and transmitter 1304. Wireless terminal control routines 1326 include the signaling routine 1328. The signaling routine 1328 includes a tone subset allocation routine 1330 for the strip-symbol periods and an other downlink tone allocation hopping routine 1332 for the rest of symbol periods, *e.g*., non strip-symbol periods. Tone subset allocation routine 1330 uses user data/info 1322 including downlink channel information 1340, base station ID info 1344, *e.g*., slope index and sector type, and downlink tone information 1354 in order to generate the downlink tone subset allocation sequences in accordance with some aspects and process received data transmitted from the base station. Other downlink tone allocation hopping routine 1330 constructs downlink tone hopping sequences, using information including downlink tone information 1354, and downlink channel information 1340, for the symbol periods other than the strip-symbol periods. Tone subset allocation routine 1330, when executed by processor 1306, is used to determine when and on which tones the wireless terminal 1300 is to receive one or more strip-symbol signals from the base station 1200. The uplink tone allocation hopping routine 1330 uses a tone subset allocation function, along with information received from the base station, to determine the tones in which it should transmit on.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

When the embodiments are implemented in program code or code segments, it should be appreciated that a code segment can represent a procedure, a function, a subprogram, a program, a routine, a subroutine, a module, a software package, a class, or any combination of instructions, data structures, or program statements. A code segment can be coupled to another code segment or a hardware circuit by passing and/or receiving information, data, arguments, parameters, or memory contents. Information, arguments, parameters, data, *etc.* can be passed, forwarded, or transmitted using any suitable means including memory sharing, message passing, token passing, network transmission, *etc.* Additionally, in some aspects, the steps and/or actions of a method or algorithm can reside as one or any combination or set of codes and/or instructions on a machine readable medium and/or computer readable medium, which can be incorporated into a computer program product.

For a software implementation, the techniques described herein can be implemented with modules (*e.g*., procedures, functions, and so on) that perform the functions described herein. The software codes can be stored in memory units and executed by processors. The memory unit can be implemented within the processor or external to the processor, in which case it can be communicatively coupled to the processor via various means as is known in the art.

For a hardware implementation, the processing units can be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof.

What has been described above includes examples of one or more embodiments. It is, of course, not possible to describe every conceivable combination of components or methodologies for purposes of describing the aforementioned embodiments, but one of ordinary skill in the art may recognize that many further combinations and permutations of various embodiments are possible. Accordingly, the described embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

As used herein, the term to "infer" or "inference" refers generally to the process of reasoning about or inferring states of the system, environment, and/or user from a set of observations as captured *via* events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

Furthermore, as used in this application, the terms "component," "module," "system," and the like are intended to refer to a computer-related entity, either hardware, firmware, a combination of hardware and software, software, or software in execution. For example, a component can be, but is not limited to being, a process running on a processor, a processor, an object, an executable, a thread of execution, a program, and/or a computer. By way of illustration, both an application running on a computing device and the computing device can be a component. One or more components can reside within a process and/or thread of execution and a component can be localized on one computer and/or distributed between two or more computers. In addition, these components can execute from various computer readable media having various data structures stored thereon. The components can communicate by way of local and/or remote processes such as in accordance with a signal having one or more data packets (*e.g*., data from one component interacting with another component in a local system, distributed system, and/or across a network such as the Internet with other systems by way of the signal).

In the following, further aspects are described to facilitate the understanding of the current invention.

In one further aspect, a method that facilitates radio link monitoring is described, the method comprising receiving a downlink communication via a set of configured downlink carriers, monitoring a channel quality of a received signal over the set of configured downlink carriers, tracking a control channel quality of a control signal over at least one primary carrier, wherein the at least one primary carrier may be included in a set of control carriers, and wherein the set of control carriers may be included in the set of configured downlink carriers and performing a radio link failure determination based on the control channel quality. The method may further comprise reporting a set of channel quality indicator measurements associated with the set of configured downlink carriers to an external entity. The control signal may be a Physical Downlink Control Channel. Also, the method may comprise comparing the control channel quality to a threshold and the radio link failure determination may be based on the comparing. Further, the tracking may comprise tracking a single primary carrier, and the radio link failure determination may be based on a link loss detected over the single primary carrier. Further, the tracking may comprise tracking a first primary carrier and a second primary carrier, and the radio link failure determination may be based on a first link loss detected over the first primary carrier and a second link loss detected over the second primary carrier. Further, the received signal may include a reference signal.

In another aspect, an apparatus configured to facilitate radio link monitoring is described, the apparatus comprising a processor configured to execute computer executable components stored in memory, the components including a communication component configured to receive a downlink communication via a set of configured downlink carriers, a monitoring component configured to monitor a channel quality of a received signal over the set of configured downlink carriers, a control monitoring component configured to track a control channel quality of a control signal over at least one primary carrier, wherein the at least one primary carrier may be included in a set of control carriers, and wherein the set of control carriers may be included in the set of configured downlink carriers and a determining component configured to perform a radio link failure determination based on the control channel quality. The apparatus may also comprise a measurement component configured to ascertain a set of channel quality indicator measurements associated with the set of configured downlink carriers, wherein the communication component may further be configured to report the set of channel quality indicator measurements to an external entity. Also, the downlink communication may include a monitoring scheme directing the control monitoring component to select at least one carrier, and the control channel quality may be tracked over the at least one carrier. Further, the determining component may be configured to make a comparison between the control channel quality and a threshold, and the radio link failure determination may be based on the comparison. The control channel quality may also be tracked over a single primary carrier, and the radio link failure determination may be based on a link loss detected over the single primary carrier. Further, the control channel quality may be tracked over a first primary carrier and a second primary carrier, and the radio link failure determination may be based on a first link loss detected over the first primary carrier and a second link loss detected over the second primary carrier. Further, the received signal may include a reference signal.

In yet another aspect, a computer program product is described that facilitates radio link monitoring, the computer product comprising a computer-readable storage medium comprising code for causing at least one computer to receive a downlink communication via a set of configured downlink carriers, monitor a channel quality of a received signal over the set of configured downlink carriers, track a control channel quality of a control signal over at least one primary carrier, wherein the at least one primary carrier may be included in a set of control carriers, and wherein the set of control carriers may be included in the set of configured downlink carriers and perform a radio link failure determination based on the control channel quality. Further, the received signal may include a reference signal. The code may further cause the at least one computer to make a comparison between the control channel quality and a threshold, wherein the radio link failure determination may be based on the comparison.

In another aspect, an apparatus configured to facilitate radio link monitoring is described, the apparatus comprising means for receiving a downlink communication via a set of configured downlink carriers, means for monitoring a channel quality of a received signal over the set of configured downlink carriers, means for tracking a control channel quality of a control signal over at least one primary carrier, wherein the at least one primary carrier may be included in a set of control carriers, and wherein the set of control carriers may be included in the set of configured downlink carriers and means for performing a radio link failure determination based on the control channel quality. Also, the means for tracking the control channel quality of the control signal may be configured to track a single primary carrier, and the radio link failure determination may be based on a link loss detected over the single primary carrier. Further, the means for tracking the control channel quality of the control signal may be configured to track a first primary carrier and a second primary carrier, and the radio link failure determination may be based on a first link loss detected over the first primary carrier and a second link loss detected over the second primary carrier.

In yet another aspect, a method that facilitates radio link monitoring is described, the method comprising receiving a downlink communication via a set of configured downlink carriers, monitoring a channel quality of a received signal over the set of configured downlink carriers, selecting an additional carrier in response to a link loss associated with each of a set of control carriers, wherein the set of control carriers may be included in the set of configured downlink carriers, and wherein the additional carrier may be a configured downlink carrier which may not be included in the set of control carriers, tracking a control channel quality of a control signal over the additional carrier and performing a radio link failure determination based on the control channel quality. The method may also comprise reporting a set of channel quality indicator measurements associated with the set of configured downlink carriers to an external entity. The received signal may include a reference signal. Also, the method may comprise comparing the control channel quality to a threshold, wherein the radio link failure determination may be based on the comparing. Further, the selecting may comprise selecting at least one of a set of secondary carriers to be the additional carrier, and wherein the set of secondary carriers may be a subset of the set of configured downlink carriers, which may not include the set of control carriers. The selecting may comprise selecting each carrier in the set of configured downlink carriers in response to the link loss. Also, the method may comprise reducing a set of monitored control carriers according to a received configuration message, wherein the received configuration message may be based on a set of channel quality indicator measurements.

In yet another aspect, an apparatus configured to facilitate radio link monitoring is described, the apparatus comprising a processor configured to execute computer executable components stored in memory, the components including a communication component configured to receive a downlink communication via a set of configured downlink carriers, a monitoring component configured to monitor a channel quality of a received signal over the set of configured downlink carriers, a control monitoring component configured to track a control channel quality of a control signal over at least one additional carrier selected in response to a link loss associated with each of a set of control carriers, wherein the set of control carriers may be included in the set of configured downlink carriers, and wherein the at least one additional carrier may be a configured downlink carrier, which may not be included in the set of control carriers and a determining component configured to perform a radio link failure determination based on the control channel quality. The method may further comprise a measurement component configured to ascertain a set of channel quality indicator measurements associated with the set of configured downlink carriers, wherein the communication component may further be configured to report the set of channel quality indicator measurements to an external entity. The received signal may include a reference signal. Further, the determining component may be configured to make a comparison between the control channel quality and a threshold, and the radio link failure determination may be based on the comparison. Further, the control monitoring component may be configured to declare at least one of a set of secondary carriers to be the at least one additional carrier, and the set of secondary carriers may be a subset of the set of configured downlink carriers, which may not include the set of control carriers. Further, the control channel quality of the control signal may be tracked over each carrier in the set of configured downlink carriers in response to the link loss. Also, the control monitoring component may be configured to reduce a set of monitored control carriers according to a received configuration message, and the received configuration message may be based on a set of channel quality indicator measurements.

In another aspect, a computer program product that facilitates radio link monitoring is described, the computer program product comprising a computer-readable storage medium comprising code for causing at least one computer to receive a downlink communication via a set of configured downlink carriers, monitor a channel quality of a received signal over the set of configured downlink carriers, select an additional carrier in response to a link loss associated with each of a set of control carriers, wherein the set of control carriers may be included in the set of configured downlink carriers, and wherein the additional carrier may be a configured downlink carrier, which may not be included in the set of control carriers, track a control channel quality of a control signal over the additional carrier and perform a radio link failure determination based on the control channel quality. Further, the code may cause the at least one computer to report a set of channel quality indicator measurements associated with the set of configured downlink carriers to an external entity. The code may also cause the at least one computer to declare at least one of a set of secondary carriers to be the additional carrier, wherein the set of secondary carriers may be a subset of the set of configured downlink carriers, which may not include the set of control carriers. Also, the code may cause the at least one computer to have the control channel quality of the control signal tracked over each carrier in the set of configured downlink carriers in response to the link loss.

In another aspect, an apparatus configured to facilitate radio link monitoring is described, the apparatus comprising means for receiving a downlink communication via a set of configured downlink carriers, means for monitoring a channel quality of a received signal over the set of configured downlink carriers, means for selecting an additional carrier in response to a link loss associated with each of a set of control carriers, wherein the set of control carriers may be included in the set of configured downlink carriers, and wherein the additional carrier may be a configured downlink carrier, which may not be included in the set of control carriers, means for tracking a control channel quality of a control signal over the additional carrier and means for performing a radio link failure determination based on the control channel quality. Thereby, the means for tracking the control channel quality of the control signal may be configured to track the control channel quality of the control signal over each carrier in the set of configured downlink carriers in response to the link loss. Further, the received signal may be a reference signal.

In yet another aspect, a method that facilitates radio link monitoring is described, the method comprising receiving a set of channel quality indicator measurements, wherein the set of channel quality indicator measurements is associated with a set of configured downlink carriers monitored by a wireless terminal, updating an active set of carriers based on the set of channel quality indicator measurements, wherein the active set of carriers is an active carrier subset of the set of configured downlink carriers, ascertaining a set of control carriers based on an updated active set of carriers, wherein the set of control carriers is a control carrier subset of the updated active set of carriers and configuring the wireless terminal to monitor a control signal over at least one carrier in the set of control carriers. Also, the method may comprise comparing the set of channel quality indicator measurements to a threshold, wherein the updating may be based on the comparing. Further, the configuring may comprise providing the wireless terminal with a monitoring scheme to facilitate an identification of at least one carrier. The monitoring scheme may also direct the wireless terminal to track a single primary carrier included in the set of control carriers, and wherein a radio link failure determination may be based on a link loss detected over the single primary carrier. Also, the monitoring scheme may direct the wireless terminal to track a first primary carrier and a second primary carrier included in the set of control carriers, and wherein a radio link failure determination may be based on a first link loss detected over the first primary carrier and a second link loss detected over the second primary carrier. Further, the monitoring scheme may direct the wireless terminal to track at least one additional carrier in response to a link loss detected over each of the set of control carriers, and the at least one additional carrier may be a configured downlink carrier, which may not be included in the set of control carriers. The method may also comprise transmitting the control signal on the at least one additional carrier. Further, the monitoring scheme may direct the wireless terminal to select at least one of a set of secondary carriers to be the at least one additional carrier, and wherein the set of secondary carriers may be a secondary carrier subset of the set of configured downlink carriers, which may not include the set of control carriers. Further, the at least one additional carrier may be each carrier in the set of configured downlink carriers. Also, the monitoring scheme may direct the wireless terminal to reduce a set of monitored control carriers based on a channel quality assessment of the set of monitored control carriers. Further, the updating may comprise removing an unusable carrier from the active set of carriers. Also, the ascertaining may comprise removing the unusable carrier from the set of control carriers. The method may further comprise reconfiguring the wireless terminal to not track the control signal over the unusable carrier. Also, the method may further comprise ceasing to transmit the control signal over the unusable carrier. Further, the updating may comprise adding a new carrier to the active set of carriers. Also, the ascertaining may comprise adding the new carrier to the set of control carriers. Further, the method may comprise reconfiguring the wireless terminal to track the control signal over the new carrier. Also, the method may comprise transmitting the control signal over the new carrier.

In another aspect, an apparatus configured to facilitate radio link monitoring is described, the apparatus comprising a processor configured to execute computer executable components stored in memory, the components including a communication component configured to receive a set of channel quality indicator measurements, wherein the set of channel quality indicator measurements may be associated with a set of configured downlink carriers monitored by a wireless terminal, an active carrier update component configured to update an active set of carriers based on the set of channel quality indicator measurements, wherein the active set of carriers may be an active carrier subset of the set of configured downlink carriers, a control carrier update component configured to ascertain a set of control carriers based on an updated active set of carriers, wherein the set of control carriers may be a control carrier subset of the updated active set of carriers and a control monitoring component configured to direct the wireless terminal to monitor a control signal over at least one carrier in the set of control carriers. Thereby, the active carrier update component may be configured to make a comparison between the set of channel quality indicator measurements and a threshold, and wherein the active set of carriers may be updated based on the comparison. Further, the control monitoring component may be configured to generate a monitoring scheme to facilitate an identification of at least one carrier, and the communication component may be configured to transmit the monitoring scheme to the wireless terminal. Further, the monitoring scheme may direct the wireless terminal to track a single primary carrier included in the set of control carriers, and a radio link failure determination may be based on a link loss detected over the single primary carrier. Further, the monitoring scheme may direct the wireless terminal to track a first primary carrier and a second primary carrier included in the set of control carriers, and a radio link failure determination may be based on a first link loss detected over the first primary carrier and a second link loss detected over the second primary carrier. Also, the monitoring scheme may direct the wireless terminal to track at least one additional carrier in response to a link loss detected over each of the set of control carriers, and the at least one additional carrier may be a configured downlink carrier which may not be included in the set of control carriers. Further, the communication component may be configured to transmit the control signal on the at least one additional carrier. Also, the monitoring scheme may direct the wireless terminal to select at least one of a secondary set of carriers to be the at least one additional carrier, and the secondary set of carriers may be a secondary carrier subset of the set of configured downlink carriers which may not include the set of control carriers. Further, the at least one additional carrier may be each carrier in the set of configured downlink carriers. Further, the monitoring scheme may direct the wireless terminal to reduce a set of monitored control carriers based on a channel quality assessment of the set of monitored control carriers. Further, the active carrier update component may be configured to remove an unusable carrier from the active set of carriers. Further, the control carrier update component may be configured to remove the unusable carrier from the set of control carriers. Also, the control monitoring component may be configured to reconfigure the wireless terminal to not track the control signal over the unusable carrier. Further, the communication component may be configured to cease transmitting the control signal over the unusable carrier. Also, the active carrier update component may be configured to add a new carrier to the active set of carriers. Further, the control carrier update component may be configured to add the new carrier to the set of control carriers. Also, the control monitoring component may be configured to reconfigure the wireless terminal to track the control signal over the new carrier. Further, the communication component may be configured to transmit the control signal over the new carrier.

In yet another aspect, a computer program product that facilitates radio link monitoring is described, the computer program product comprising a computer-readable storage medium comprising code for causing at least one computer to receive a set of channel quality indicator measurements, wherein the set of channel quality indicator measurements is associated with a set of configured downlink carriers monitored by a wireless terminal, update an active set of carriers based on the set of channel quality indicator measurements, wherein the active set of carriers is an active carrier subset of the set of configured downlink carriers ascertain a set of control carriers based on an updated active set of carriers, wherein the set of control carriers may be a control carrier subset of the updated active set of carriers and configure the wireless terminal to monitor a control signal over at least one carrier in the set of control carriers. Thereby, the code may further cause the at least one computer to make a comparison between the set of channel quality indicator measurements and a threshold, wherein the active set of carriers may be updated based on the comparison. Further, the code may cause the at least one computer to provide the wireless terminal with a monitoring scheme to facilitate an identification of at least one carrier. Thereby, the monitoring scheme may direct the wireless terminal to track a single primary carrier included in the set of control carriers, and a radio link failure determination may be based on a link loss detected over the single primary carrier. Further, the monitoring scheme may direct the wireless terminal to track a first primary carrier and a second primary carrier included in the set of control carriers, and a radio link failure determination may be based on a first link loss detected over the first primary carrier and a second link loss detected over the second primary carrier.

In yet another aspect, an apparatus configured to facilitate radio link monitoring is described, the apparatus comprising means for receiving a set of channel quality indicator measurements, wherein the set of channel quality indicator measurements is associated with a set of configured downlink carriers monitored by a wireless terminal, means for updating an active set of carriers based on the set of channel quality indicator measurements, wherein the active set of carriers is an active carrier subset of the set of configured downlink carriers, means for ascertaining a set of control carriers based on an updated active set of carriers, wherein the set of control carriers is a control carrier subset of the updated active set of carriers and means for configuring the wireless terminal to monitor a control signal over at least one carrier in the set of control carriers. The apparatus may further comprise means for transmitting a monitoring scheme to the wireless terminal to facilitate an identification of at least one carrier. The monitoring scheme may identify at least one additional carrier to track in response to a link loss detected over each of the set of control carriers, and the at least one additional carrier may be a configured downlink carrier which may not be included in the set of control carriers. Further, the monitoring scheme may direct the wireless terminal to select at least one of a set of secondary carriers to be the at least one additional carrier, and the set of secondary carriers may be a secondary carrier subset of the set of configured downlink carriers which may not include the set of control carriers. Also, the at least one additional carrier may be each carrier in the set of configured downlink carriers.

## Claims

1. A method that facilitates radio link monitoring, the method comprising:
receiving (620) a set of channel quality indicator measurements, wherein the set of channel quality indicator measurements is associated with a set of configured downlink carriers monitored by a wireless terminal (304);
updating (625) an active set of carriers (308) based on the set of channel quality indicator measurements, wherein the active set of carriers (308) is an active carrier subset of the set of configured downlink carriers;
ascertaining (605) a set of control carriers based on an updated active set of carriers (308), wherein the set of control carriers is a control carrier subset of the updated active set of carriers (308);
and
configuring (610, 615) the wireless terminal (304) to monitor a control signal over at least one carrier in the set of control carriers.

2. The method of claim 1, further comprising comparing the set of channel quality indicator measurements to a threshold, wherein the updating (625) is based on the comparing.

3. The method of claim 1, wherein the configuring (610, 615) further comprises providing the wireless terminal (304) with a monitoring scheme to facilitate an identification of at least one carrier.

4. The method of claim 3, wherein the monitoring scheme directs the wireless terminal (304) to track a single primary carrier included in the set of control carriers, and wherein a radio link failure determination is based on a link loss detected over the single primary carrier.

5. The method of claim 3, wherein the monitoring scheme directs the wireless terminal (304) to track a first primary carrier and a second primary carrier included in the set of control carriers, and wherein a radio link failure determination is based on a first link loss detected over the first primary carrier and a second link loss detected over the second primary carrier.

6. The method of claim 3, wherein the monitoring scheme directs the wireless terminal (304) to track at least one additional carrier in response to a link loss detected over each of the set of control carriers, and wherein the at least one additional carrier is a configured downlink carrier which is not included in the set of control carriers.

7. The method of claim 1, wherein the updating (625) comprises removing an unusable carrier from the active set of carriers (308).

8. The method of claim 7, wherein the ascertaining (605) comprises removing the unusable carrier from the set of control carriers.

9. The method of claim 8, further comprising reconfiguring the wireless terminal (304) to not track the control signal over the unusable carrier.

10. The method of claim 8, further comprising ceasing to transmit the control signal over the unusable carrier.

11. The method of claim 1, wherein the updating (625) comprises adding a new carrier to the active set of carriers (308).

12. The method of claim 11, wherein the ascertaining (605) comprises adding the new carrier to the set of control carriers.

13. The method of claim 12, further comprising reconfiguring the wireless terminal (304) to track the control signal over the new carrier.

14. A computer program product that facilitates radio link monitoring, comprising:
a computer-readable storage medium comprising code for causing a computer to perform a method according to any of claims 1 to 13.

15. An apparatus configured to facilitate radio link monitoring, the apparatus comprising:
means for receiving (510) a set of channel quality indicator measurements, wherein the set of channel quality indicator measurements is associated with a set of configured downlink carriers monitored by a wireless terminal (304);
means for updating (512) an active set of carriers (308) based on the set of channel quality indicator measurements, wherein the active set of carriers (308) is an active carrier subset of the set of configured downlink carriers;
means for ascertaining (514) a set of control carriers based on an updated active set of carriers (308), wherein the set of control carriers is a control carrier subset of the updated active set of carriers (308); and
means for configuring (516) the wireless terminal (304) to monitor a control signal over at least one carrier in the set of control carriers.
